# EUROPEAN PATENT APPLICATION

(11) **EP 4 851 015 A1**
(43) Date of publication of application: **09.12.2026**
(21) Application number: 25736779.7
(22) Date of filing: 23.01.2025
(51) Int. Cl.: B62B 7/06

(54) **PULL ROD MECHANISM, FRAME ASSEMBLY, SEAT FIXING MECHANISM AND CART**

(30) Priority: 29.01.2024 CN 202410122584; 29.01.2024 CN 202410132706; 29.01.2024 CN 202410122402; 08.05.2024 CN 202410566880
(71) Applicant: Wonderland Switzerland AG, 6312 Steinhausen (CH)
(72) Inventor: ZHU, Wanquan, Dongguan, Guangdong 523648 (CN); GUO, Zhengwen, Dongguan, Guangdong 523648 (CN)
(74) Representative: Müller-Boré & Partner Patentanwälte PartG mbB
(86) International application number: PCT/CN2025/074393
(87) International publication number: WO 2025/162190

(57) **Abstract**

A pull rod mechanism, a frame assembly, a seat fixing mechanism and a cart. The pull rod mechanism (2) comprises: a third connection base (194); a rotating portion (192), the rotating portion (192) being connected to the third connection base (194) and being capable of pivoting between a first pivot position and a second pivot position relative to the third connection base (194); a pull rod (19), one end of the pull rod (19) being connected to the rotating portion (192), when the rotating portion (192) is pivoted to the first pivot position, the pull rod (19) being pivoted to an upright position, and when the rotating portion (192) is pivoted to the second pivot position, the pull rod (19) being pivoted to a lie-flat position; and a first positioning member (193), the first positioning member (193) being arranged between the third connection base (194) and the rotating portion (192), and the first positioning member (193) being configured to limit the pivoting of the rotating portion (192). The frame assembly (1) comprises: a base frame (10); front foot rods (11), the lower ends of the front foot rods (11) being capable of pivotally connecting to the base frame (10); rear foot rods (12), the lower ends of the rear foot rods (12) being capable of pivotally connecting to the base frame (10); and a handle assembly (14), the lower ends of the handle assembly (14) being capable of pivotally connecting to the upper ends of the front foot rods (11), and the upper ends of the rear foot rods (12) being capable of pivotally connecting to the handle assembly (14). When the frame assembly (1) is switched from an unfolded state to a folded state, the handle assembly (14) pivots relative to the front foot rods (11), and drives the front foot rods (11) and the rear foot rods (12) to pivot relative to the base frame (10), such that the handle assembly (14), the front foot rods (11) and the rear foot rods (12) are folded towards the base frame (10). The seat fixing mechanism (132) comprises fixing bases (133, 233) and snap-fit bases (134, 234), wherein the snap-fit bases (134, 234) can be pivotally connected to the fixing bases (133, 233), the snap-fit bases (134, 234) can move between folded positions and unfolded positions relative to the fixing bases (133, 233), and the snap-fit bases (134, 234), when located at the unfolded positions, are farther away from the fixing bases (133, 233) than when the snap-fit bases (134, 234) are located at the folded positions. The pull rod mechanism, the frame assembly, the seat fixing mechanism and the cart have simple structures and are easy to fold.

## Description

### CROSS REFERENCE TO RELATED APPLICATION

This application claims priority of Chinese Patent Application No. 2024101225843, entitled "SEAT FIXING MECHANISM AND STROLLER HAVING THE SAME", filed on January 29, 2024, the Chinese Patent Application No. 2024101327067, entitled "PULL ROD MECHANISM AND STROLLER HAVING THE SAME", filed on January 29, 2024, the Chinese Patent Application No. 2024101224022, entitled "FRAME AND STROLLER HAVING THE SAME", filed on January 29, 2024, and the Chinese Patent Application No. 2024105668802, entitled "FRAME, PULL ROD MECHANISM, SEAT FIXING MECHANISM, AND STROLLER", filed on May 8, 2024, the entire contents of which are incorporated herein by reference.

### TECHNICAL FIELD

The present application relates to a field of strollers, and in particular, to a pull rod mechanism, a stroller, a frame, and a seat fixing mechanism.

### BACKGROUND

Strollers such as campers and child strollers are popular with consumers due to capabilities of seating infants and carrying items. However, the stroller on the market often has the problem that the stroller is unfoldable or is inconvenient to fold. For convenient use, generally, a pull rod is arranged on the stroller to facilitate a user to pull the stroller. However, the current pull rod of the stroller on the market is inconvenient for users to operate, and thus, it is necessary to design a new pull rod mechanism and a stroller with the same. In addition, generally, a seat device such as a safety seat or a carrier for seating a child may be further mounted to the stroller. However, a current seat fixing mechanism in the stroller on the market is complex in structure, and the seat fixing mechanism cannot be folded when the seat device is not mounted, thereby affecting use and folding of the stroller.

### SUMMARY

Based on this, in order to solve at least one of the above technical problems, it is necessary to provide a frame that can be rapidly folded, a pull rod mechanism that is convenient for users to operate, a fixing mechanism that is simple in structure and easy to fold, and a stroller.

According to an aspect of the present application, there is provided a frame, including: a chassis; a front leg rod, a lower end of the front leg rod being pivotably connected to the chassis; a rear leg rod, a lower end of the rear leg rod being pivotably connected to the chassis; and a handlebar, a lower end of the handlebar being pivotably connected to an upper end of the front leg rod, and an upper end of the rear leg rod being pivotably connected to the handlebar. When the frame is switched from an unfolded state to a folded state, the handlebar pivots relative to the front leg rod and drives the front leg rod and the rear leg rod to pivot relative to the chassis, so that the handlebar, the front leg rod and the rear leg rod are folded towards the chassis.

The frame according to an embodiment of the present application can be easily and rapidly folded by pushing the handlebar.

In an embodiment, when the frame is switched from the unfolded state to the folded state, the handlebar and the rear leg rod pivot towards the front of the frame, and the front leg rod pivots towards the rear of the frame.

In an embodiment, when the frame is switched from the unfolded state to the folded state, an included angle between the handlebar and the rear leg rod is gradually reduced.

In an embodiment, the frame further includes: a locking joint being connected to the lower end of the handlebar and the upper end of the front leg rod, and the locking joint being configured to lock the handlebar and the front leg rod to prevent relative a pivoting of the handlebar and the front leg rod; and an release mechanism being arranged on the handlebar, and the release mechanism being configured to release the locking of the handlebar and the front leg rod by the locking joint to allow the relative pivoting of the handlebar and the front leg rod.

In an embodiment, the locking joint includes: a first connecting base, an upper end of the first connecting base being connected to the handlebar; a second connecting base, a lower end of the second connecting base being connected to the front leg rod, and the second connecting base being pivotably connected to the first connecting base; and a locking member being arranged in the first connecting base, and the locking member having a lock position where the locking member locks the first connecting base and the second connecting base to prevent a relative pivoting of the first connecting base and the second connecting base.

In an embodiment, the release mechanism includes: a release operating member, the release operating member being arranged on the handlebar and operably connected to the locking member, and the release operating member being configured to drive the locking member to slide to an unlock position, so as to release the locking of the first connecting base and the second connecting base by the locking member to allow the first connecting base and the second connecting base to pivot relatively.

In an embodiment, the locking joint further includes: a first reset member being fixed in the first connecting base and abutting against the locking member, and the first reset member being configured to cause the locking member to have a movement tendency to slide to the lock position.

In an embodiment, the release mechanism further includes: a first connecting member, an end of the first connecting member being connected to the release operating member, another end of the first connecting member being connected to the locking member, and the release operating member driving the locking member to slide to the unlock position through the first connecting member.

In an embodiment, a first locking groove and a first locking protrusion are formed at an end of the second connecting base, and a second locking protrusion and a second locking groove are formed in an end of the locking member. When the locking member is at the lock position, the second locking protrusion is engaged in the first locking groove, and the first locking protrusion is engaged in the second locking groove.

In an embodiment, the frame further includes a support frame being pivotably connected to the locking joint.

In an embodiment, the frame further includes a linkage rod, an end of the linkage rod being pivotably connected to the support frame, and another end of the linkage rod being pivotably connected to the rear leg rod. A pivot point where the rear leg rod is pivotably connected to the handlebar is located on a side of the handlebar facing an interior of the frame, and a projection of a pivot track of the rear leg rod along a height direction does not overlap with a projection of a pivot track of the front leg rod and/or the handlebar along the height direction.

In an embodiment, when the frame is switched from the unfolded state to the folded state, the linkage rod pivots towards the rear of the frame, the rear leg rod pivots towards the front of the frame, and an included angle between the linkage rod and the rear leg rod is gradually increased.

In an embodiment, the frame further includes a support frame, the support frame being pivotably connected to the handlebar.

In an embodiment, the frame further includes a linkage rod, an end of the linkage rod being pivotably connected to the support frame, and another end of the linkage rod being pivotably connected to the front leg rod. A pivot point where the rear leg rod is pivotably connected to and the handlebar is located on a lower side of the handlebar in a height direction, and a projection of a pivot track of the rear leg rod along the height direction at least partially overlaps with a projection of a pivot track of the front leg rod and/or the handlebar along the height direction.

In an embodiment, when the frame is switched from the unfolded state to the folded state, the linkage rod pivots towards the rear of the frame, the rear leg rod pivots towards the front of the frame, and an included angle between the linkage rod and the rear leg rod is gradually increased.

In an embodiment, the chassis includes: two first rods extending roughly along a length direction, a first bending portion protruding towards the interior of the frame being formed on each of the first rods to form first avoidance spaces, and when the frame is in the folded state, at least part of the front leg rod being located in the first avoidance space.

In an embodiment, a second bending portion protruding towards the rear of the frame is formed on the rear leg rod to form a second avoidance space, and when the frame is in the folded state, at least part of the handlebar is located in the second avoidance space.

In an embodiment, the chassis further includes: two second rods extending roughly along a width direction. The two first rods and the two second rods form a roughly rectangular structure. A second reinforcing rod is arranged between the two first rods, and two ends of the second reinforcing rod are connected to the first bending portion of each of the two first rods respectively.

In an embodiment, the chassis includes: two first rods extending roughly along a length direction; two second rods extending roughly along a width direction; and at least one first reinforcing rod being arranged between the two first rods.

According to an aspect of the present application, there is provided a stroller including the frame according to any one of the foregoing embodiments.

According to another aspect of the present application, there is provided a pull rod mechanism, including: a third connecting base; a rotating portion being connected to the third connecting base and pivotable relative to the third connecting base between a first pivot position and a second pivot position; a pull rod, an end of the pull rod being connected to the rotating portion. When the rotating portion pivots to the first pivot position, the pull rod pivoting to an erect position, and when the rotating portion pivots to the second pivot position, the pull rod pivoting to a lying position; and a first positioning member being arranged between the third connecting base and the rotating portion, and the first positioning member being configured to restrict the rotating portion from pivoting.

The use position of the pull rod mechanism according to any one of embodiments of the present application can be easily adjusted and positioned, realize the adjustment of the use angle of the pull rod, and is easy to operate and has wide applicability.

In an embodiment, the first positioning member is a damping plate, and the damping plate is clamped between the rotating portion and the third connecting base.

In an embodiment, an end of the third connecting base is recessed inwards to form a pivot space, at least part of the rotating portion is received in the pivot space, and the damping plate is clamped between the rotating portion and a side wall of the pivot space.

In an embodiment, the pivot space includes two side walls arranged opposite to each other, at least part of the rotating portion is located between the two side walls of the pivot space, and the first positioning member includes two damping plates, one of the two damping plates being clamped between one of the two side walls of the pivot space and the rotating portion, and another of the two damping plates being clamped between another of the two side walls of the pivot space and the rotating portion.

In an embodiment, the first positioning member includes: a positioning recess arranged in one of the rotating portion and the third connecting base; and a positioning protrusion arranged on another of the rotating portion and the third connecting base, when the positioning protrusion enters the positioning recess, a shape of the positioning recess fitting a shape of the positioning protrusion to restrict the rotating portion from pivoting.

In an embodiment, an end of the third connecting base is recessed inwards to form a pivot space, at least part of the rotating portion is received in the pivot space, and an inner surface of at least one side wall of the pivot space faces at least one surface of the rotating portion; one of the surface of the rotating portion and the side wall of the pivot space is provided with at least one elastic finger, another of the surface of the rotating portion and the side wall of the pivot space is provided with a plurality of positioning recesses, a positioning protrusion is arranged on a side of the elastic finger facing the positioning recess, and the positioning protrusion is engaged with one of the plurality of positioning recesses to position the pull rod at one of a plurality of pivot angles.

In an embodiment, an end of the third connecting base is recessed inwards to form a pivot space, at least part of the rotating portion is received in the pivot space, and a limiting groove is arranged in an inner wall of the pivot space of the third connecting base; the rotating portion is provided with a limiting protrusion, the limiting protrusion slides in the limiting groove with pivoting of the rotating portion, and when the rotating portion pivots from the first pivot position to the second pivot position, the limiting protrusion abuts against a side wall of the limiting groove to restrict the rotating portion from continuing to pivot.

In an embodiment, the pull rod mechanism further includes: a sliding rail, the third connecting base being connected to the sliding rail and slidable between a first sliding position and a second sliding position along the sliding rail, when the third connecting base slides to the first sliding position, the pull rod sliding to an extend position, and when the third connecting base slides to the second sliding position, the pull rod sliding to an accommodated position.

In an embodiment, the pull rod mechanism further includes: a locking device arranged on the third connecting base and the sliding rail, the locking device being configured to lock the third connecting base at the first sliding position and/or the second sliding position.

In an embodiment, the third connecting base is provided with a first through hole slidably sleeving the sliding rail, and the locking device includes: a second through hole arranged in a side wall of the first through hole; a second positioning hole arranged in a part of the sliding rail corresponding to the first sliding position of the third connecting base; and a second positioning member arranged in the sliding rail, at least part of the second positioning member being slidable in the second positioning hole to retract into and protrude from the second positioning hole, and when the third connecting base slides to the first sliding position, at least part of the second positioning member protruding from the second positioning hole and entering the second through hole, so as to lock the third connecting base at the first sliding position.

In an embodiment, the third connecting base is provided with a first through hole slidably sleeving the sliding rail, and the locking device includes: a second through hole arranged in a side wall of the first through hole; a third positioning hole arranged in a part of the sliding rail corresponding to the second sliding position of the third connecting base; and a third positioning member arranged in the sliding rail, at least part of the third positioning member being slidable in the third positioning hole to retract into and protrude from the third positioning hole, and when the third connecting base slides to the second sliding position, at least part of the third positioning member protruding from the third positioning hole and entering the second through hole, so as to lock the third connecting base at the second sliding position.

In an embodiment, the pull rod mechanism further includes: a fixing portion, the sliding rail being connected to the fixing portion, and when the rotating portion pivots from the second pivot position to the first pivot position, the pull rod abutting against a front surface of the fixing portion to restrict the rotating portion from continuing to pivot.

In an embodiment, the rotating portion includes: a body, the body being configured in a roughly cylindrical structure; and a connecting end, the connecting end being configured as a protrusion protruding from a cylindrical curved surface of the body, the protrusion being provided with a first connecting hole, and an end of the pull rod being inserted in the first connecting hole.

In an embodiment, an end of the third connecting base is recessed inwards to form a pivot space, the pivot space is configured in a roughly cylindrical shape matching a shape of the body of the rotating portion, and the body of the rotating portion is pivotably arranged in the pivot space.

In an embodiment, another end of the third connecting base is provided with a first through hole, and the first through hole slidably sleeves the sliding rail.

In an embodiment, a side wall of the first through hole is provided with a second through hole; a second positioning hole is arranged in a part of the sliding rail corresponding to the first sliding position of the third connecting base, a second positioning member is arranged in the sliding rail, and at least part of the second positioning member is slidable in the second positioning hole to retract into and protrude from the second positioning hole. When the third connecting base slides to the first sliding position, at least part of the second positioning member protrudes from the second positioning hole and enters the second through hole, so as to lock the third connecting base at the first sliding position.

In an embodiment, the second positioning member is a spring plate having a first post, and the first post is slidable in the second positioning hole.

In an embodiment, a side wall of the first through hole is provided with a second through hole. A third positioning hole is arranged in a part of the sliding rail corresponding to the second sliding position of the third connecting base, a third positioning member is arranged in the sliding rail, and at least part of the third positioning member is slidable in the third positioning hole to retract into and protrude from the third positioning hole. When the third connecting base slides to the second sliding position, at least part of the third positioning member protrudes from the third positioning hole and enters the second through hole, so as to lock the third connecting base at the second sliding position.

In an embodiment, the third positioning member is a spring plate having a second post, and the second post is slidable in the third positioning hole.

In an embodiment, a limiting protrusion is arranged on the cylindrical curved surface of the body of the rotating portion. An inner wall of the pivot space of the third connecting base is provided with a limiting groove, and when the rotating portion pivots, the limiting protrusion slides in the limiting groove. When the rotating portion pivots from the first pivot position to the second pivot position, the limiting protrusion abuts against a side wall of the limiting groove to restrict the rotating portion from continuing to pivot.

In an embodiment, the pull rod mechanism further includes: a fixing portion, the sliding rail being connected to the fixing portion. When the rotating portion pivots from the second pivot position to the first pivot position, the pull rod abuts against a front surface of the fixing portion to restrict the rotating portion from continuing to pivot.

In an embodiment, the pull rod mechanism further includes: a front rod; and a rear rod, two fixing portions being fixed to the front rod and the rear rod respectively, and two ends of the sliding rail being connected to the two fixing portions respectively. When the rotating portion pivots from the second pivot position to the first pivot position, the pull rod abuts against a front surface of the fixing portion fixed to the front rod to restrict the rotating portion from continuing to pivot.

In an embodiment, the pull rod mechanism further includes: at least one accommodating member being arranged on the front rod, and an accommodating groove being formed in the accommodating member. When the pull rod slides to the accommodated position, at least part of the pull rod is accommodated in the accommodating groove.

In an embodiment, the pull rod includes: a connecting rod, an end of the connecting rod being connected to the rotating portion; and a handle, the handle being connected to another end of the connecting rod. When the pull rod slides to the accommodated position, the handle is accommodated in the accommodating groove.

In an embodiment, two accommodating members are provided, the two accommodating members are spaced apart by the fixing portion arranged on the front rod, and openings of the accommodating grooves of the two accommodating members are arranged opposite to each other.

In an embodiment, one accommodating member is provided, the accommodating member is arranged on a lower side of the fixing portion, and an opening of the accommodating groove of the accommodating member faces the front of the fixing portion.

In an embodiment, the first positioning member is a damping plate, and the damping plate is clamped between an end surface of the body of the rotating portion and an inner surface of the side wall of the pivot space facing the rotating portion.

In an embodiment, the damping plate is a flexible component.

In an embodiment, the damping plate is made of at least one of soft colloid, rubber material, and plastic material.

In an embodiment, the first positioning member includes: a positioning recess being arranged in one of an end surface of the body of the rotating portion and an inner wall of the pivot space; and a positioning protrusion being arranged on another of the end surface of the body of the rotating portion and the inner wall of the pivot space. When the positioning protrusion enters the positioning recess, a shape of the positioning recess fits a shape of the positioning protrusion to restrict the rotating portion from pivoting.

According to another aspect of the present application, there is provided a stroller, including: a chassis; and the pull rod mechanism according to the any one of foregoing embodiments. The pull rod mechanism is connected to the chassis.

The use position of the pull rod mechanism of the stroller according to any one of embodiments of the present application can be easily adjusted and positioned, realize the adjustment of the use angle of the pull rod, and is easy to operate and has wide applicability.

According to an aspect of the present application, there is provided a seat fixing mechanism, including: a fixed base; and an engaging base being slidably connected to the fixed base, the engaging base being capable of moving between a folded position and an unfolded position relative to the fixed base, and a distance of the engaging base from the fixed base at the unfolded position is great than the distance of the engaging base from the fixed base at the folded position. The seat fixing mechanism according to embodiments of the present application is simple in structure and easy to fold, and does not interfere with other components of a stroller.

In an embodiment, the engaging base includes: an engagement portion being configured to be inserted into an engagement groove of a seat; and a base portion being connected to the engagement portion and pivotably connected to the fixed base. An arc-shaped transition region exists between the engagement portion and the base portion, and a width of the engagement portion is less than that of the base portion.

In an embodiment, an upper end of the engagement portion is provided with a first engaging hole; and/or a lower end of the base portion is provided with a second engaging hole.

In an embodiment, the fixed base is provided with a connecting end portion, the engaging base is provided with a third connecting groove, and the connecting end portion is inserted into the third connecting groove to pivotably connect the fixed base to the engaging base.

In an embodiment, at least one first convex portion and at least one first concave portion are formed at an end of the connecting end portion facing the engaging base, a first inclined surface is arranged between the first convex portion and the first concave portion, at least one second convex portion and at least one second concave portion are formed at a bottom wall of the third connecting groove, a second inclined surface is arranged between the second convex portion and the second concave portion. When the engaging base is at the folded position, the second convex portion is engaged in the first concave portion, and the first convex portion is engaged in the second concave portion, and when the engaging base pivots from the folded position to the unfolded position, the first convex portion is disengaged from the second concave portion, and through fitting of the second inclined surface and the first inclined surface, the first convex portion slides to a position where the first convex portion abuts against the second convex portion, and the engaging base slides in a direction away from the fixed base.

In an embodiment, two opposite first convex portions and two opposite first concave portions are formed at an end of the connecting end portion facing the engaging base, the two first convex portions are spaced apart by the two first concave portions, and a first inclined surface is arranged between the adjacent first convex portion and first concave portion. The bottom wall of the third connecting groove is provided with two opposite second convex portions and two opposite second concave portions, the two second convex portions are spaced part by the two second concave portions, and a second inclined surface is arranged between the adjacent second convex portion and second concave portion. When the engaging base is at the folded position, the two second convex portions are engaged in the two first concave portions respectively, and the two first convex portions are engaged in the two second concave portions respectively. When the engaging base pivots to the unfolded position from the folded position, the first convex portion is disengaged from the second concave portion, and through fitting of the second inclined surface and the first inclined surface, the first convex portion slides to a position where the first convex portion abuts against the second convex portion, and the engaging base slides in a direction away from the fixed base.

In an embodiment, the engaging base is provided with a mounting through hole, an end cover and a first elastic member are arranged in the mounting through hole, the end cover is connected to the fixed base, an end of the first elastic member abuts against an end wall of the mounting through hole, another end of the first elastic member abuts against the end cover, and the first elastic member continuously applies a pressure to the engaging base, so that the engaging base has a movement tendency of sliding towards the fixed base.

In an embodiment, the connecting end portion is provided with a lock hole, the engaging base includes a release operating member, and when the engaging base pivots to the unfolded position, at least part of the release operating member enters the lock hole to lock the engaging base at the unfolded position.

In an embodiment, the engaging base includes a mounting cavity, the release operating member being slidably arranged in the mounting cavity. The release operating member includes: a locking portion, the locking portion entering the lock hole when the engaging base pivots to the unfolded position, so as to lock the engaging base at the unfolded position; and a pressing portion being connected to the locking portion, and the release operating member sliding away from the lock hole by applying a pressure to the pressing portion, so that the locking portion is separated from the lock hole to unlock the engaging base.

In an embodiment, the engaging base includes a second elastic member, an end of the second elastic member being fixed in the mounting cavity, another end of the second elastic member abutting against the release operating member, and the second elastic member continuously applying a pressure to the release operating member, so that the release operating member has a movement tendency of sliding towards the third connecting groove.

In an embodiment, one of the fixed base and the engaging base is provided with a pivot shaft, and another of the fixed base and the engaging base is provided with a mounting hole. The mounting hole sleeves the pivot shaft, and the engaging base is pivotable around the pivot shaft and slides along an axial direction of the pivot shaft. When the engaging base pivots to the folded position, in a height direction, the engaging base does not protrude from an upper surface of the fixing base.

In an embodiment, one of the fixed base and the engaging base is further provided with a limiting portion, and another of the fixed base and the engaging base is further provided with a limiting hole. When the engaging base pivots into a folded state, the limiting portion is engaged in the limiting hole.

In an embodiment, one of the fixed base and the engaging base is further provided with an arc-shaped connecting body, another of the fixed base and the engaging base is further provided with a groove body, and a shape of the groove body fits that of the connecting body. When the engaging base pivots into an unfolded state, the connecting body is engaged in the groove body.

In an embodiment, one of the connecting body and the groove body is provided with a limiting recess, and another of the connecting body and the groove body is provided with a limiting member. When the engaging base pivots into the unfolded state, the limiting member is engaged in the limiting recess to lock the engaging base at the unfolded position.

In an embodiment, the connecting body is provided with a first connecting groove and a first connecting edge, and the groove body is provided with a second connecting groove and a second connecting edge. When the engaging base pivots into the unfolded state, the second connecting groove accommodates the first connecting edge, and the second connecting edge enters the first connecting groove.

In an embodiment, a third elastic member is arranged between the fixed base and the engaging base, and the third elastic member abuts against the engaging base and continuously applies a pressure to the engaging base, so that the engaging base has a movement tendency of sliding towards the fixed base.

According to another aspect of the present application, there is provided a stroller, including: the seat fixing mechanism according to any one of the foregoing embodiments; a support frame, the seat fixing mechanism being fixed on the support frame; and a seat, the seat being detachably fixed to the seat fixing mechanism.

### BRIEF DESCRIPTION OF THE DRAWINGS

The above and other objects, features and advantages of the present invention will become more apparent from a more detailed description of the preferred embodiments of the present invention shown in the accompanying drawings. The same reference numerals refer to the same parts throughout the drawings, and the drawings are not intentionally drawn to scale, the emphasis being placed on illustrating the subject matter of the present invention.

Other features, objects and advantages of the present invention will become more apparent upon reading of the detailed description of non-limiting embodiments made with reference to the following drawings:
FIG. 1 is a perspective view of a frame in an unfolded state according to an embodiment of the present application.
FIG. 2 is a side view of the frame shown in FIG. 1.
FIG. 3 is a side view of the frame shown in FIG. 1, in which a sunshade is in a folded state and a pull rod is in an accommodated state.
FIG. 4 is a side view of the frame shown in FIG. 1, in which a handlebar and a rear leg rod begin to pivot towards the front of the frame, and a front leg rod begins to pivot towards the rear of the frame.
FIG. 5 is a side view of the frame shown in FIG. 1, in which the handlebar and the rear leg rod further pivot towards the front of the frame, and the front leg rod further pivots towards the rear of the frame.
FIG. 6 is a side view of the frame shown in FIG. 1, in which the frame is switched into a folded state.
FIG. 7 is a perspective partial sectional view of a push handle of the frame according to an embodiment of the present application.
FIG. 8 is a side partial sectional view of the handlebar of the frame according to an embodiment of the present application.
FIG. 9 is a perspective view of a frame in an unfolded state according to an embodiment of the present application.
FIG. 10 is a side view of the frame shown in FIG. 9.
FIG. 11 is a side view of the frame shown in FIG. 9, in which a sunshade is in a folded state, a pull rod is in an accommodated state, a handlebar begins to pivot towards the front of the frame, and a front leg rod begins to pivot towards the rear of the frame.
FIG. 12 is a side view of the frame shown in FIG. 9, in which the handlebar further pivots towards the front of the frame, a rear leg rod begins to pivot towards the front of the frame, and the front leg rod further pivots towards the rear of the frame.
FIG. 13 is a side view of the frame shown in FIG. 9, in which the frame is switched into a folded state.
FIG. 14 is a side partial sectional view of the handlebar of the frame according to an embodiment of the present application.
FIG. 15 is a side view of a stroller according to an embodiment of the present application, showing a pull rod at an erect position.
FIG. 16 is a side view of the stroller shown in FIG. 15, showing the pull rod at a use position.
FIG. 17 is a side view of the stroller shown in FIG. 15, showing the pull rod at a lying position.
FIG. 18 is a top view of a pull rod mechanism according to an embodiment of the present application.
FIG. 19 is a perspective view of a stroller according to an embodiment of the present application.
FIG. 20 is a perspective view of the stroller according to an embodiment of the present application, showing a pull rod mechanism in a partially exploded state.
FIG. 21 is a perspective view of the stroller according to an embodiment of the present application from another perspective, showing the pull rod mechanism in the partially exploded state.
FIG. 22 is a perspective view of the stroller according to an embodiment of the present application, showing a pull rod at an accommodated position.
FIG. 23 is a partial sectional view taken along line A-A of FIG. 19.
FIG. 24 is a partial sectional view taken along line B-B of FIG. 22.
FIG. 25 is a perspective view of the stroller according to an embodiment of the present application, showing the pull rod at an erect position.
FIG. 26 is a perspective view of the stroller shown in FIG. 25, showing the pull rod at the accommodated position.
FIG. 27 is a partial sectional view taken along line C-C of FIG. 26, in which a partial structure of the stroller is omitted.
FIG. 28 is a perspective view of a pull rod mechanism according to an embodiment of the present application.
FIG. 29 is a partially enlarged sectional view of the pull rod mechanism taken along a virtual plane G shown in FIG. 28.
FIG. 30 is a perspective view of a stroller according to an embodiment of the present application, in which an engaging base is at a folded position.
FIG. 31 is a perspective view of the stroller according to an embodiment of the present application, in which the engaging base is at an unfolded position.
FIG. 32 is a side view of a seat fixing mechanism according to an embodiment of the present application, in which an engaging base is at a folded position.
FIG. 33 is a side view of the seat fixing mechanism according to an embodiment of the present application, in which the engaging base is at an unfolded position.
FIG. 34 is a top view of a stroller according to an embodiment of the present application, in which an engaging base is at a folded position.
FIG. 35 is a top view of the stroller according to an embodiment of the present application, in which the engaging base is at an unfolded position.
FIG. 36 is a top view of a stroller with a seat mounted according to an embodiment of the present application.
FIG. 37 is a side view of the stroller with the seat mounted shown in FIG. 36.
FIG. 38 is a sectional view of a seat fixing mechanism taken along line I-I of FIG. 34, in which other structures of the stroller are omitted.
FIG. 39 is a sectional view of the seat fixing mechanism taken along line J-J of FIG. 35, in which other structures of the stroller are omitted.
FIG. 40 is a partial exploded view of a seat fixing mechanism according to an embodiment of the present application.
FIG. 41 is an exploded view of a seat fixing mechanism according to an embodiment of the present application.
FIG. 42 is a perspective view of a stroller according to an embodiment of the present application, in which an engaging base is at a folded position.
FIG. 43 is an enlarged view of part D in FIG. 42.
FIG. 44 is a perspective view of the stroller according to an embodiment of the present application, in which the engaging base is at an unfolded position.
FIG. 45 is an enlarged view of part E in FIG. 44.
FIG. 46 is a top view of a stroller according to an embodiment of the present application, in which an engaging base is at a folded position.
FIG. 47 is a top view of the stroller according to an embodiment of the present application, in which the engaging base is at an unfolded position.
FIG. 48 is an enlarged view of part F in FIG. 46.
FIG. 49 is a partial exploded view of a seat fixing mechanism according to an embodiment of the present application.
FIG. 50 is a perspective view of a frame according to an embodiment of the present application.
FIG. 51 is a perspective view of a container according to an embodiment of the present application.

### List of reference signs

1: frame, 10: chassis, 100: first rod, 101: first reinforcing rod, 102: second reinforcing rod, 103: second rod, 1031: front rod, 1032: rear rod, 11: front leg rod, 110: front leg base, 1001: first bending portion, 1002: fold hook, 10010: first avoidance space, 12: rear leg rod, 120: rear leg base, 121: second bending portion, 1210: second avoidance space, 122: convex portion, 123: concave portion, 13: support frame, 130: dinner plate assembly, 131: sunshade assembly, 132: seat fixing mechanism, 133: fixed base, 1331: first elastic member, 1332: lock hole, 1333: connecting end portion, 13331: first convex portion, 13332: first concave portion, 13333: first inclined surface, 13334: first connecting shaft, 13335: limiting rib, 1334: mounting groove, 1335: end cover, 134: engaging base, 1340: mounting through hole, 1341: release operating member, 13411: locking portion, 13412: pin, 13413: pressing portion, 13414: second elastic member, 1342: third connecting groove, 13421: second convex portion, 13422: second concave portion, 13423: second inclined surface, 13424: projection portion, 13425: fitting hole, 13426: limiting groove, 1343: mounting cavity, 13431: chute, 1344: cover plate, 1345: casing, 1346: engaging portion, 1347: first engaging hole, 1348: second engaging hole, 1349: base portion, 14: handlebar, 140: inner rod, 141: outer rod, 142: push handle, 143: connecting protrusion, 145: extending rod, 15: locking joint, 151: first connecting base, 1510: first protruding portion, 152: second connecting base, 1520: first locking groove, 1521: first locking protrusion, 1522: second protruding portion, 16: release mechanism, 160: release operating member, 161: first connecting member, 162: locking member, 163: first reset member, 1620: second locking protrusion, 1621: second locking groove, 17: handlebar length adjustment mechanism, 170: adjustment button, 171: second reset member, 172: second connecting member, 173: adjustment member, 1730: straight groove, 1731: locking member, 1732: pin, 174: driving member, 175: third reset member, 18: linkage rod, 19: pull rod,190: handle, 1901: grip, 1902: mounting portion, 191: connecting rod, 1910: first pivot hole, 192: rotating portion, 1921: body, 1922: connecting end, 19220: first connecting hole, 19221: receiving cavity, 1923: limiting protrusion, 1924: second pivot hole, 193: first positioning member, 1931: damping plate, 19310: third pivot hole, 1932: first positioning recess, 194: third connecting base, 1941: first through hole, 1942: second through hole, 1943: fourth pivot hole, 1944: pivot space, 19440: limiting groove, 19441: side wall, 1945: first limiting protrusion, 195: pivot pin, 196: sliding rail, 1960: second positioning member, 1961: second positioning hole, 19601: first post, 1962: third positioning member, 1963: third positioning hole, 19621: second post, 197: accommodating member, 1970: accommodating groove, 198: fixing portion, 1980: fixing hole, 1981: first fixing portion, 1982: second fixing portion, 199: elastic finger.
2: pull rod mechanism, 233: fixed base, 2330: connecting body, 2331: first connecting groove, 2332: first connecting edge, 2333: limiting portion, 23331: elastic member, 23332: guide inclined surface, 2334: limiting recess, 234: engaging base, 2340: groove body, 2341: second connecting groove, 2342: second connecting edge, 2343: mounting hole, 2344: limiting hole, 2345: limiting member, 2356: engaging portion, 2347: first engaging hole, 2348: second engaging hole, 2349: base portion, 235: pivot shaft.
3: storage assembly, 30: mounting frame, 301: outer wall, 302: first projecting portion, 303: second projecting portion, 304: first engaging groove, 31: container, 32: engaging mechanism, 321: engaging edge, 322: locking projection, 323: deformation groove, 324: second engaging groove, 3241: guide portion, 3242: engaging portion, 3243: opening, 33: support rib.
4: pivot assembly, 41: the first connector, 42: second connector, 410: unlock button.
D1: plane, D2: extension direction, D3: direction, D4: direction, H: height direction, L: length direction, W: width direction.
L1, L1', L2, L2': distance, α, β, γ: included angle.

### DETAILED DESCRIPTION

To facilitate an understanding of the present invention, the present invention is described more fully hereinafter with reference to the accompanying drawings. Preferred embodiments of the present invention are shown in the drawings. However, the present invention may be implemented in many different forms and is not limited to the embodiments set forth herein. Rather, these embodiments are provided to make the disclosure of the present invention more thorough and complete.

It should be noted that when an element is considered to be "connected to" another element, the element may be directly connected to and combined with the other element or an intermediate element may exist. The terms "mounted", "an end", "another end", or the like, as used herein are for illustrative purposes only.

Unless defined otherwise, all technical and scientific terms used herein have the same meanings as would be generally understood by those skilled in the technical field of the present invention. The terms used herein in the specification of the present invention are for the purpose of describing specific embodiments only, and are not intended to limit the present invention. The term "and/or" used herein includes any and all combinations of one or more related listed items.

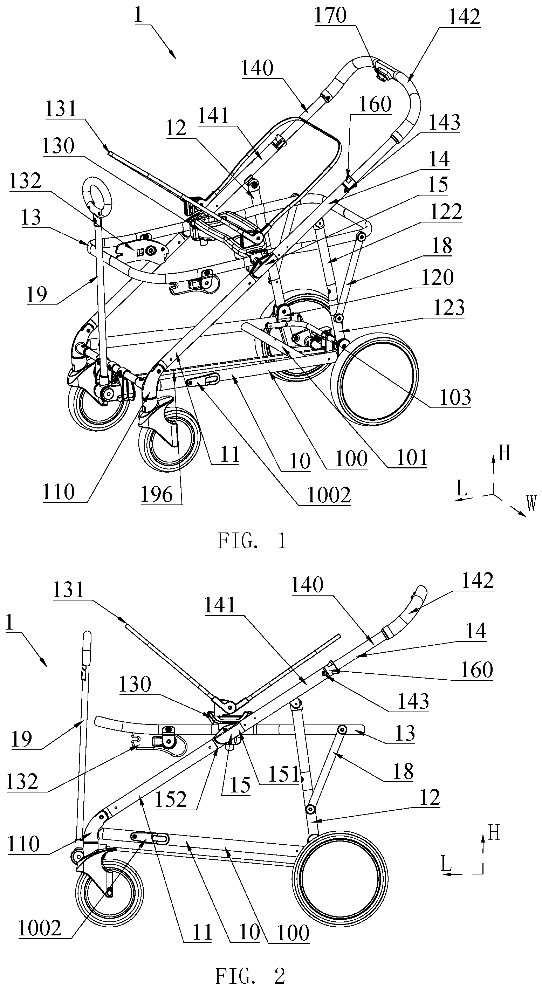

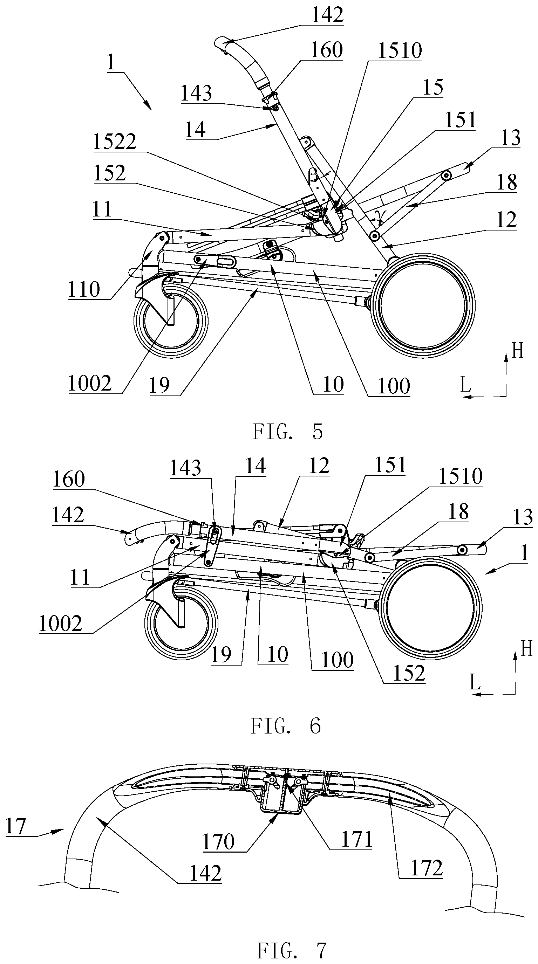

Referring to FIG. 1 to FIG. 6 together, FIG. 1 shows a frame 1 according to an embodiment of the present application, which includes a chassis 10, a front leg rod 11, a rear leg rod 12, and a handlebar 14. A lower end of the front leg rod 11 is pivotably connected to the chassis 10. A lower end of the rear leg rod 12 is pivotably connected to the chassis 10. A lower end of the handlebar 14 is pivotably connected to an upper end of the front leg rod 11, and an upper end of the rear leg rod 12 is pivotably connected to the handlebar 14. The frame 1 can switch between an unfolded state (as shown in FIG. 1) and a folded state (as shown in FIG. 6). For convenience of description, terms indicating relative positions such as "up", "down", "front", and "rear" are used in the present application, and these terms indicating relative positions are referred to with reference to the orientation of the frame 1 in the unfolded state. Specifically, the position further away from a support plane of the frame 1 is referred to as "up" and the position relatively close to the support plane of the frame 1 is referred to as "down". For example, the upper end of the front leg rod 11 refers to an end of the front leg rod 11 relatively far away from the support plane of the frame 1 when the frame 1 is in the unfolded state, and the lower end of the front leg rod 11 refers to an end of the front leg rod 11 relatively close to the support plane of the frame 1 when the frame 1 is in the unfolded state. Specifically, an end of the frame 1 away from a user when a stroller is pushed forwards by the handlebar 14 is referred to as "front", and an end of the frame 1 relatively close to the user is referred to as "rear". For example, the front of the frame 1 refer to the left of the frame 1 in FIG. 2, and the rear of the frame 1 refers to the right of the frame 1 in FIG. 2.

In the embodiment shown in FIG. 1, the chassis 10 includes: two first rods 100 and two second rods 103, the first rods 100 extending substantially along a length direction L, the second rods 103 extending substantially along a width direction W, and the two first rods 100 and the two second rods 103 forming a roughly rectangular structure. Optionally, at least one first reinforcing rod 101 is arranged between the two first rods 100, and the first reinforcing rod 101 is configured to enhance overall structural stability of the chassis 10. When the frame 1 is in the unfolded state, the first rod 100 of the chassis 10, the front leg rod 11, the rear leg rod 12, and a part of the handlebar 14 form a polygonal structure. In this embodiment, the first rod 100 of the chassis 10, the front leg rod 11, the rear leg rod 12, and a part of the handlebar 14 form a roughly triangular structure (in this embodiment, an acute triangle structure, and in other embodiments, an obtuse triangle or right triangle structure), so as to ensure stability of a stroller body.

Referring to FIG. 2 to FIG. 6 together, when the frame 1 is switched from the unfolded state to the folded state, the handlebar 14 and the rear leg rod 12 pivot towards the front of the frame 1, an included angle β between the handlebar 14 and the rear leg rod 12 gradually decreases, the front leg rod 11 pivots towards the rear of the frame 1, and the first rod 100, the front leg rod 11, the rear leg rod 12, and the handlebar 14 no longer maintain the roughly triangular structure. In the folding process, the handlebar 14 pivots relative to the front leg rod 11 and drives the front leg rod 11 and the rear leg rod 12 to pivot relative to the chassis 10, so that the handlebar, the front leg rod, and the rear leg rod are folded towards the chassis. Taking inner angles of the polygonal structure as included angles between the first rod 100, the front leg rod 11, the rear leg rod 12, and the handlebar 14, in the folding process, the included angle between the handlebar 14 and the rear leg rod 12 (in this embodiment, the included angle is an acute included angle) gradually decreases, the included angle between the front leg rod 11 and the chassis 10 (in this embodiment, the included angle is an acute included angle) gradually decreases, and the included angle between the rear leg rod 12 and the chassis 10 (in this embodiment, the included angle is an acute included angle) gradually decreases, so that the handlebar 14, the front leg rod 11 and the rear leg rod 12 gradually approach the chassis 10 until the handlebar 14, the front leg rod 11, the rear leg rod 12, and the chassis 10 are tightly stacked together in a height direction H, and thus, the frame 1 is switched to the folded state, as shown in FIG. 6. Therefore, the handlebar 14 pivots relative to the front leg rod 11 to drive the front leg rod 11 and the rear leg rod 12 to pivot relative to the chassis 10 for folding, so that the frame can be folded quickly. In this embodiment, compared with the unfolded state (as shown in FIG. 1), pivot directions of both the handlebar 14 and the rear leg rod 12 are opposite to a pivot direction of the front leg rod 11, sizes of the frame 1 in the height direction H and the length direction L in the folded state (as shown in FIG. 6) are significantly reduced, and thus, the frame can be easily accommodated and stored, for example, in a trunk of an automobile. Further, due to the significant reduction in size of the frame 1 in the folded state, the user can more easily lift and carry the stroller. Optionally, the front leg rod 11 is provided with a fold hook 1002, the handlebar 14 is provided with a connecting protrusion 143, and when the frame 1 is switched to the folded state, the fold hook 1002 can be hooked on the connecting protrusion 143 to keep the frame 1 in the folded state, thereby preventing accidental unfolding.

Referring to FIG. 1 to FIG. 6 together, the frame 1 is further provided with a locking joint 15. The locking joint 15 is connected to the lower end of the handlebar 14 and the upper end of the front leg rod 11, and the handlebar 14 and the front leg rod 11 are pivotably connected by the locking joint 15. Specifically, the locking joint 15 includes: a first connecting base 151 and a second connecting base 152 pivotably connected to each other. An upper end of the first connecting base 151 is connected to the lower end of the handlebar 14. A lower end of the second connecting base 152 is connected to the upper end of the front leg rod 11. The locking joint 15 is configured such that, when the frame 1 is in the unfolded state, the first connecting base 151 and the second connecting base 152 of the locking joint 15 are locked to each other and cannot pivot relative to each other, thereby locking the handlebar 14 and the front leg rod 11 and preventing relative pivoting of the handlebar 14 and the front leg rod 11, so that the frame 1 is stably maintained in the unfolded state. When the first connecting base 151 and the second connecting base 152 are unlocked, the handlebar 14 and the front leg rod 11 are allowed to pivot relatively, so that the frame can switch from the unfolded state to the folded state. It should be noted that, optionally, the first connecting base 151 and the handlebar 14 are formed separately and then connected by welding, riveting, or the like. Optionally, the first connecting base 151 and the handlebar 14 may alternatively form a one-piece structure, and in such an embodiment, the lower end of the handlebar 14 and the upper end of the front leg rod 11 are directly connected together in the forming process. Similarly, the second connecting base 152 and the front leg rod 11 may be formed separately or from a one-piece structure.

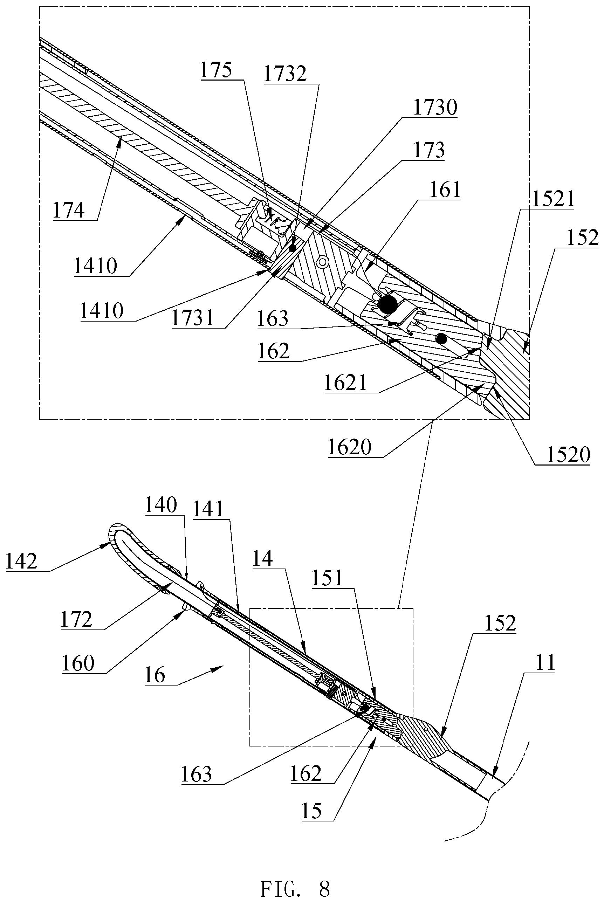

Referring to FIG. 8, in an embodiment, the locking joint 15 is provided with a locking member 162. The locking member 162 has a lock position, and when the locking member 162 is at the lock position, the locking member 162 locks the first connecting base 151 and the second connecting base 152 to prevent the first connecting base 151 and the second connecting base 152 from pivoting relative to each other.

With continued reference to FIG. 8, in an embodiment, the locking member 162 may slide along an axial direction of the first connecting base 151 (a length direction of the handlebar 14 in this embodiment). An end of the locking member 162 facing the second connecting base 152 is provided with a second locking protrusion 1620 and a second locking groove 1621. An end of the second connecting base 152 facing the first connecting base 151 is provided with a first locking groove 1520 and a first locking protrusion 1521. When the locking member 162 moves to the lock position, the second locking protrusion 1620 is engaged in the first locking groove 1520, and the first locking protrusion 1521 is engaged in the second locking groove 1621. In this case, a side of the first locking protrusion 1521 facing the locking member 162 abuts against an inner wall of the second locking groove 1621, a side wall of the first locking protrusion 1521 abuts against a side wall of the second locking protrusion 1620, and a side of the second locking protrusion 1620 facing the second connecting base 152 abuts against an inner wall of the first locking groove 1520. Thus, by the sliding engagement of the locking member 162 and the first connecting base 151, the abutting engagement of the second locking protrusion 1620 and the first locking groove 1520, and the abutting engagement of the first locking protrusion 1521 and the second locking groove 1621, the locking of the first connecting base 151 and the second connecting base 152 is realized to prevent the relative pivoting of the first connecting base 151 and the second connecting base 152. Thus, the handlebar 14 and the front leg rod 11 are locked, the relative pivoting of the handlebar 14 and the front leg rod 11 is prevented, and the frame 1 can be stably kept in the unfolded state.

It should be noted that, in this embodiment, the locking member 162 is arranged coaxially with the first connecting base 151, and in other embodiments, the locking member 162 may be arranged on the side of an axial line of the first connecting base 151, as long as the locking member 162 can slide along the axial direction of the first connecting base 151 and is locked and engaged with the second connecting base 152.

In this embodiment, an end of the first connecting base 151 close to the second connecting base 152 is provided with a first extending portion and a first concave portion, an end of the second connecting base 152 close to the first connecting base 151 is provided with a second extending portion and a second concave portion, and when the first connecting base 151 and the second connecting base 152 are interlocked, the first extending portion is received in the second concave portion, the second extending portion is received in the first concave portion, and projections of the first extending portion and the second extending portion along the width direction W overlap. In this embodiment, the handlebar 14 and the front leg rod 11 have arc peripheral surfaces, and the first extending portion and the second extending portion also have arc peripheral surfaces to join outer shapes of the handlebar 14 and the front leg rod 11. The first locking groove 1520 and the first locking protrusion 1521 are arranged at an end portion of the second extending portion. The locking member 162 is remote from the front leg rod 11 relative to the first extending portion.

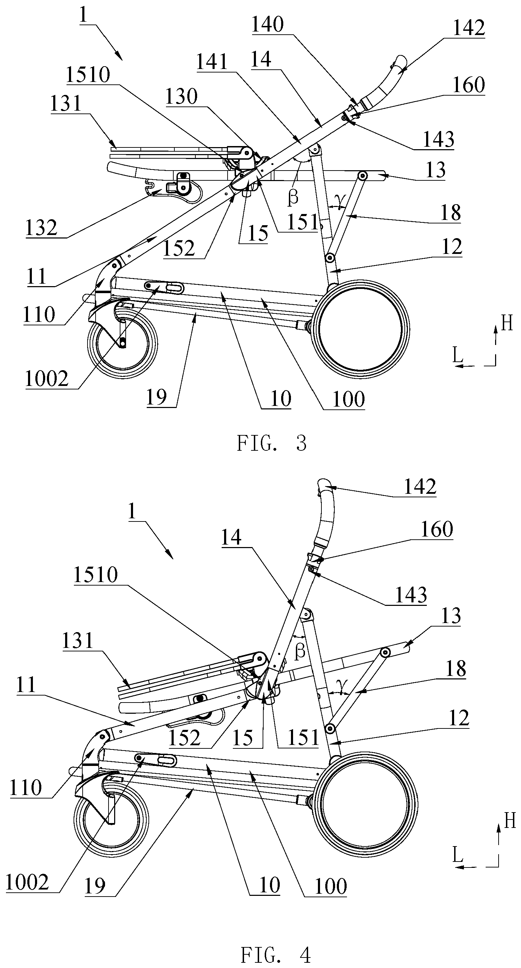

Referring to FIG. 3 to FIG. 5 and FIG. 8 together, further, the first connecting base 151 has a first protruding portion 1510 protruding from one side of the first extending portion, and the second connecting base 152 has a second protruding portion 1522 protruding from one side of the second extending portion. When the first connecting base 151 and the second connecting base 152 are interlocked, the first protruding portion 1510 and the second protruding portion 1522 overlap in the width direction W. A pivot point between the first connecting base 151 and the second connecting base 152 is located at the first protruding portion 1510 and the second protruding portion 1522. In this embodiment, the handlebar 14 pivots towards the front of the frame 1 relative to the front leg rod 11, the first protruding portion 1510 and the second protruding portion 1522 are located on upper edge sides of the first extending portion and the second extending portion respectively, and when the frame is in the folded state, the handlebar 14 rotates around the pivot point to be folded above the front leg rod 11 (as shown in FIG. 6).

Referring to FIG. 1 and FIG. 8 together, in an embodiment, the frame 1 is also provided with an release mechanism 16. The release mechanism 16 is configured to release the locking of the handlebar 14 and the front leg rod 11 by the locking joint 15 to allow the relative pivoting of the handlebar 14 and the front leg rod 11. Optionally, the release mechanism 16 may be arranged on the handlebar 14. The release mechanism 16 includes: a release operating member 160 and a first connecting member 161. The release operating member 160 is operably connected to the locking member 162 through the first connecting member 161. Specifically, an end of the first connecting member 161 is connected to the release operating member 160, the other end of the first connecting member 161 is connected to the locking member 162, and the release operating member 160 drives the locking member 162 to move to an unlock position through the first connecting member 161. It should be noted that the release mechanism 16 may further be provided with a rivet connected to the release operating member 160 and passing through the handlebar 14, an end of the first connecting member 161 may be connected to the rivet to be connected to the release operating member 160, and the handlebar 14 may be provided with an elongated groove for the rivet to slide; alternatively, an end of the first connecting member 161 is directly connected to the release operating member 160, and the handlebar 14 may also be provided with an elongated groove for the first connecting member 161 to pass through and slide; alternatively, the release operating member 160 has a connecting portion extending into an inner cavity of the handlebar 14, an end of the first connecting member 161 is directly connected to the connecting portion, and the handlebar is provided with an elongated groove for the connecting portion to slide. Specifically, the user pushes and pulls the release operating member 160 to drive the locking member 162 to move to the unlock position, so as to release the locking of the handlebar 14 and the front leg rod 11 by the locking joint 15, thus allowing the handlebar 14 and the front leg rod 11 to pivot relatively, and then allowing the frame 1 to switch from the unfolded state to the folded state. Optionally, as shown in FIG. 1, the release operating member 160 may be arranged on the handlebar 14 close to a push handle 142 for easy operation by the user. It should be understood by those skilled in the art that the arrangement of the release operating member 160 on the handlebar 14 close to the push handle 142 is only an optional embodiment of the present application, and the release operating member 160 may be arranged at other suitable positions according to use requirements, as long as the locking member 162 can be driven to slide to the unlock position by the release operating member 160.

Referring to FIG. 8, in an embodiment, the release operating member 160 is a sliding type push button that sleeves the handlebar 14 and can slide along an axial direction (i.e., a length extension direction) of the handlebar 14. Optionally, the release operating member 160 may alternatively be provided in other forms such as a button or a knob, as long as the locking member 162 can be driven to slide to the unlock position by the release operating member 160. In an embodiment, the first connecting member 161 is a steel wire arranged within the inner cavity of the handlebar 14. Optionally, the first connecting member 161 may alternatively be other forms of connecting members such as a connecting rod, a connecting sheet and a connecting block, as long as the release operating member 160 can be operably connected to the locking member 162.

Referring to FIG. 8, in an embodiment, the locking joint 15 further includes: a first reset member 163. The first reset member 163 is fixed in the first connecting base 151 and abuts against the locking member 162. The first reset member 163 is configured such that the locking member 162 has a movement tendency of sliding to the lock position. Optionally, the first reset member 163 is a spring, the spring is arranged in the first connecting base 151, an end of the spring is connected in the first connecting base 151 (or the handlebar 14), and the other end of the spring is connected to the locking member 162. The spring is configured to continuously apply a pressure to the locking member 162, so that the locking member 162 has the movement tendency of sliding to the lock position. Optionally, the first reset member 163 may alternatively be other forms of reset mechanisms such as an elastic sheet and a torsion spring, as long as the locking member 162 has the movement tendency of sliding to the lock position.

Referring to FIG. 3, FIG. 7, and FIG. 8, in an embodiment, the handlebar 14 includes: a push handle 142; an inner rod 140; and an outer rod 141. An upper end of the inner rod 140 is connected to the push handle 142, the other end of the inner rod 140 is sleeved with the outer rod 141, and the inner rod 140 can slide in the outer rod 141 to adjust a length and height of the handlebar 14. The frame 1 further includes a handlebar length adjustment mechanism 17, the handlebar length adjustment mechanism 17 being operably connected to the inner rod 140 and the outer rod 141 to lock relative positions of the inner rod 140 and the outer rod 141 or to allow the inner rod 140 and the outer rod 141 to slide relative to each other.

In the embodiment shown in FIG. 7 and FIG. 8, the handlebar length adjustment mechanism 17 includes: an adjustment button 170; a second reset member 171; an adjustment member 173; a third reset member 175; and a second connecting member 172. The adjustment button 170 is arranged on the push handle 142 and is slidable between an adjustment position and a fixed position. The second reset member 171 abuts against the adjustment button 170 and is configured such that the adjustment button 170 has a movement tendency of sliding to the fixed position. Optionally, the second reset member 171 is a spring, the spring is arranged in the push handle 142, an end of the spring is connected in the push handle 142, and the other end of the spring is connected to an end of the adjustment button 170. The spring is configured to continuously apply a pressure to the adjustment button 170, so that the adjustment button 170 has the movement tendency of sliding to the fixed position. Optionally, the second reset member 171 may alternatively be other forms of reset mechanisms such as an elastic sheet and a torsion spring, as long as the adjustment button 170 has the movement tendency of sliding to the fixed position. The adjustment button 170 can be drivingly connected to an end of the second connecting member 172, and the other end of the second connecting member 172 is connected to a driving member 174. When the adjustment button 170 is pressed towards the adjustment position, the adjustment button 170 causes the second connecting member 172 to be pulled towards the push handle 142 (pulled upwards), thereby pulling the driving member 174 via the second connecting member 172, causing the driving member 174 to slide along an inner rod 140 towards the push handle 142. In an embodiment, the second connecting member 172 is a steel wire. When the adjustment button 170 is pressed towards the adjustment position, the adjustment button 170 causes the steel wire to tighten, and thus, the steel wire pulls the driving member 174, causing the driving member 174 to slide along the inner rod 140 towards the push handle 142. Optionally, the second connecting member 172 may alternatively be other forms of connecting members such as a connecting rod, a connecting sheet and a connecting block, as long as the adjustment button 170 can be drivingly connected to the driving member 174.

In an embodiment, the adjustment member 173 is arranged in the inner rod 140, and the adjustment member 173 allows the inner rod 140 and the outer rod 141 to slide relative to each other, or the adjustment member 173 locks the relative positions of the inner rod 140 and the outer rod 141. Specifically, the adjustment member 173 is fixed to a lower end of the inner rod 140, the adjustment member 173 is provided with a straight groove 1730, a locking member 1731 is arranged in the straight groove 1730, and the locking member 1731 can slide along the straight groove 1730. Optionally, the locking member 1731 is a locking pin. A plurality of locking holes 1410 are arranged in the outer rod 141, and when the locking member 1731 slides into the locking hole 1410, the inner rod 140 cannot slide in the outer rod 141, and thus, the adjustment member 173 locks the relative positions of the inner rod 140 and the outer rod 141, thereby locking the length of the handlebar 14. When the locking member 1731 slides out of the locking hole 1410, the inner rod 140 is allowed to slide in the outer rod 141, and thus, the adjustment member 173 unlocks the relative positions of the inner rod 140 and the outer rod 141 to allow the length of the handlebar 14 to be adjusted. The driving member 174 is arranged in the inner rod 140, an end of the driving member 174 is connected to the second connecting member 172, the other end of the driving member 174 is provided with a driving chute (not shown), and a pin 1732 (e.g., a rivet) arranged in the locking member 1731 passes through the driving chute to connect the driving member 174 with the locking member 1731. When the user presses the adjustment button 170 to the adjustment position, the second connecting member 172 (e.g., the steel wire) pulls the driving member 174, so that the driving member 174 slides along the inner rod 140 towards the push handle 142, the driving chute of the driving member 174 forces the locking member 1731 to slide along the straight groove 1730 towards a direction of withdrawal from the locking hole 1410, and thus, the locking member 1731 slides out of the locking hole 1410 to allow the length of the handlebar 14 to be adjusted. When the handlebar 14 is adjusted to have a proper length, the user releases the pressing on the adjustment button 170, and the adjustment button 170 returns from the adjustment position to the fixed position under the action of the second reset member 171, in which case the second connecting member 172 no longer applies a pulling force to the driving member 174, the driving member 174 has a tendency of sliding along the inner rod 140 away from the push handle 142 under the action of the third reset member 175, and thus, the driving chute of the driving member 174 causes the locking member 1731 to have a movement tendency of sliding along the straight groove 1730 in a direction of entrance into the locking hole 1410. In this case, if a corresponding end of the locking member 1731 is located at a position of the locking hole 1410, the locking member 1731 slides into the locking hole 1410 to lock the length of the handlebar 14. If the corresponding end of the locking member 1731 is not located at the position of the locking hole 1410, the length of the handlebar is slightly adjusted to cause the corresponding end of the locking member 1731 to reach the position of the closest locking hole 1410, and then, the locking member 1731 automatically slides into the locking hole 1410 to lock the length of the handlebar 14. It should be noted that the adjustment member 173 may have any structure known to those skilled in the art, which is not limited in the present application.

In an embodiment, an end of the third reset member 175 abuts against the adjustment member 173, and the other end of the third reset member 175 abuts against the driving member 174. The third reset member 175 is configured such that the driving member 174 has a movement tendency of sliding away from the push handle 142. Optionally, the third reset member 175 is a spring, an end of the spring (e.g., the end of the third reset member 175 close to the push handle 142 in FIG. 8) abuts against the adjustment member 173, and the other end of the spring (e.g., the end of the third reset member 175 away from the push handle 142 in FIG. 8) abuts against the driving member 174. The spring is configured to continuously apply a pressure to the driving member 174, so that the driving member 174 has the movement tendency of sliding away from the push handle 142. Optionally, the third reset member 175 may alternatively be other forms of reset mechanisms such as an elastic sheet and a torsion spring, as long as the driving member 174 can have the tendency of sliding away from the push handle 142.

Referring to FIG. 1, in an embodiment, the frame 1 further includes: a support frame 13. The support frame 13 is of a roughly rectangular structure. Optionally, an edge of the support frame 13, for example, an edge extending substantially along the length direction L, may be recessed towards the interior of the support frame 13 to avoid interference with other components of the frame 1, which will be described in detail later. The support frame 13 is pivotably connected to the locking joint 15. Preferably, a middle portion of the support frame 13 is pivotably connected to the locking joint 15 to assist in reducing the size of the frame 1 in the folded state in the length direction (L). Optionally, accessories such as a dinner plate assembly 130, a sunshade assembly 131, and a seat fixing mechanism 132 may be arranged on the support frame 13. The dinner plate assembly 130 can be configured to hold tableware (not shown). The sunshade assembly 131 may be configured to mount a sunshade (not shown). The seat fixing mechanism 132 may be configured to be connected to mechanisms such as a sleeping basket and a safety seat (not shown). Further, in this embodiment, the frame 1 further includes a linkage rod 18. An end of the linkage rod 18 is pivotably connected to the support frame 13, and the other end of the linkage rod 18 is pivotably connected to the rear leg rod 12. When the frame 1 is in the unfolded state, a pivot point of the linkage rod 18 on the support frame 13 and a pivot point of the locking joint 15 on the support frame 13 approximately have a same height in the height direction H, and the linkage rod and the locking joint support the support frame 13 together, so that the support frame 13 is in a stable and non-pivotable state. When the frame 1 is switched from the unfolded state to the folded state, the linkage rod 18 pivots towards the rear of the frame 1, and the rear leg rod 12 pivots towards the front of the frame 1, so that an included angle γ between the linkage rod 18 and the rear leg rod 12 gradually increases, as shown in FIG. 3 to FIG. 5. The height of the pivot point of the linkage rod 18 on the support frame 13 in the height direction H is gradually reduced, and meanwhile, with the gradual reduction of the height of the locking joint 15 in the height direction H, the height of the pivot point of the locking joint 15 on the support frame 13 in the height direction H is also gradually reduced. In this process, a speed of the reduction of the height of the pivot point of the locking joint 15 on the support frame 13 in the height direction H is greater than that of the reduction of the height of the pivot point of the linkage rod 18 on the support frame 13 in the height direction H, so that the support frame 13 assumes an inclined posture with a low front part and a high rear part, as shown in FIG. 3 to FIG. 5. Finally, the support frame 13, the handlebar 14, the front leg rod 11, the rear leg rod 12, and the chassis 10 are closely stacked together in the height direction H, and thus, the frame 1 is switched to the folded state, as shown in FIG. 6. In this embodiment, a pivot point of the rear leg rod 12 and the handlebar 14 is located on a side of the handlebar 14 facing the interior of the frame 1, and a projection of a pivot track of the rear leg rod 12 along the height direction H does not overlap with a projection of a pivot track of the front leg rod 11 or the handlebar 14 along the height direction H, so that the rear leg rod 12 and the front leg rod 11 are staggered with each other in the width direction W in the folded state.

Referring to FIG. 1 and FIG. 6 together, in an embodiment, an edge of the support frame 13 extending substantially along the length direction L is recessed towards the interior of the support frame 13. A distance between two edges of the chassis 10 extending substantially in the length direction L decreases gradually from a front end to a rear end of the frame 1. In the unfolded state of the frame 1, a projection of the support frame 13 in the height direction H falls within a projection of the chassis 10 in the height direction H. That is, a distance between two edges of the support frame 13 extending substantially along the length direction L is not greater than the distance between the two edges of the chassis 10 extending substantially along the length direction L. A projection of the rear leg rod 12 in the length direction L is in a rough S shape. Specifically, a general upper section of the rear leg rod 12 has a convex portion 122 protruding towards the exterior of the frame 1, and the convex portion 122 is configured to avoid the support frame 13 to allow the upper end of the rear leg rod 12 to be pivotably connected to the handlebar 14. A general lower section of the rear leg rod 12 has a concave portion 123 recessed towards the interior of the frame 1, and the concave portion 123 is configured to provide a pivot connection point for the linkage rod 18. When the frame 1 is switched between the unfolded state and the folded state, a recess on the edge of the support frame 13 extending substantially along the length direction L and the convex portion 122 of the rear leg rod 12 provide a pivot space for the pivoting of the rear leg rod 12, so as to avoid the support frame 13 interfering with the rear leg rod 12.

In the embodiment shown in FIG. 1 to FIG. 6, the frame 1 further includes: a front leg base 110 and a rear leg base 120. The front leg base 110 is connected to the chassis 10, and the front leg rod 11 is pivotably connected to the front leg base 110. The rear leg base 120 is connected to the chassis 10, and the rear leg rod 12 is pivotably connected to the rear leg base 120. In an embodiment, the frame 1 is further provided with a pull rod 19, and the user can pull the stroller through the pull rod 19. Optionally, the pull rod 19 is arranged at the front of the chassis 10. Preferably, the pull rod 19 is pivotably arranged in a middle portion of the second rod 103. Referring to FIG. 1 and FIG. 3, in an embodiment, the pull rod 19 may slide to an accommodated position at the bottom of the chassis 10 along a sliding rail 196 arranged at the bottom of the chassis 10. As shown in FIG. 2, the chassis 10 is inclined from front to rear and from top to bottom, and the sliding rail 196 is also inclined, so that the pull rod 19 can be exactly guided to slide to the accommodated position, and the user can pull out the pull rod 19 conveniently.

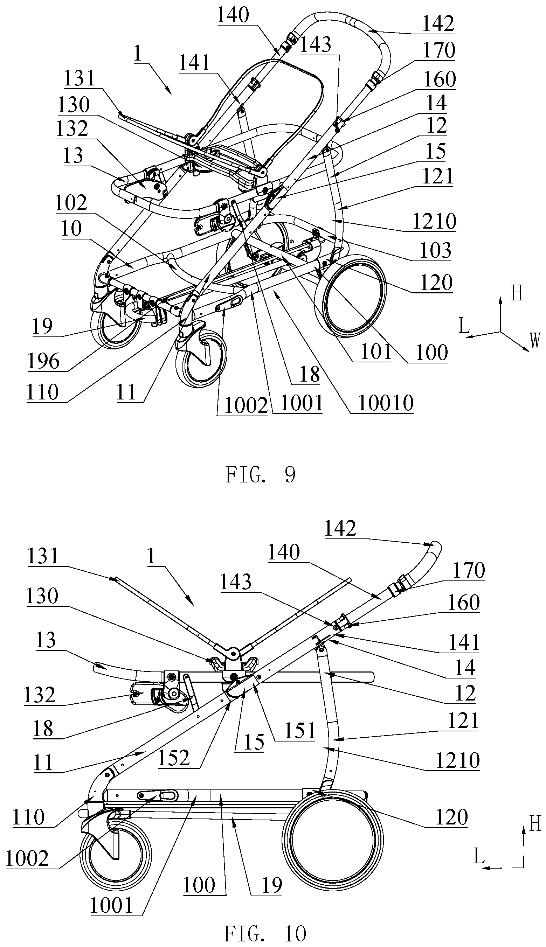

FIG. 9 shows a perspective view of a frame 1 in an unfolded state according to an embodiment of the present application. FIG. 10 to FIG. 13 show a process in which the frame 1 shown in FIG. 9 is switched from the unfolded state to a folded state. The frame 1 according to the embodiment shown in FIG. 9 is substantially the same in structure as the frame 1 according to the embodiment shown in FIG. 1, and only the differences between the two are described below.

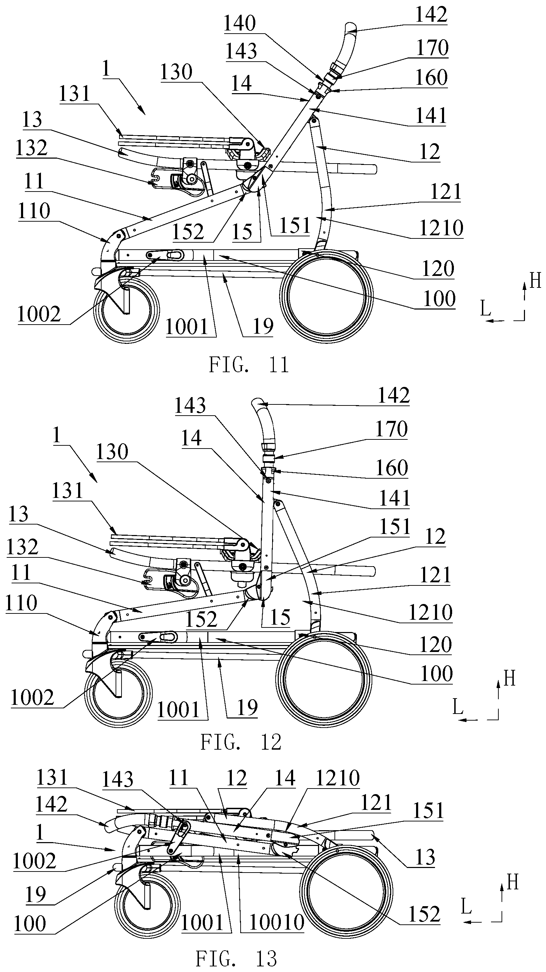

Referring to FIG. 9, in this embodiment, the first rod 100 is provided with a first bending portion 1001 protruding towards the interior of the frame 1 to form a first avoidance space 10010, and when the frame 1 is in the folded state, at least part of the front leg rod 11 is located in the first avoidance space 10010. Optionally, a position of the first bending portion 1001 on the first rod 100 is configured such that, when the frame 1 is in the folded state, at least half of an axial extension length of the front leg rod 11 can be located in the first avoidance space 10010 (as shown in FIG. 13), so that the structure of the folded frame 1 is more compact, thus further reducing the sizes of the folded frame 1 in the length direction L and the height direction H.

Referring to FIG. 9 and FIG. 13 together, in this embodiment, the rear leg rod 12 is provided with a second bending portion 121 protruding towards the rear of the frame 1 to form a second avoidance space 1210. When the frame 1 is in the folded state, at least part of the handlebar 14 is located in the second avoidance space 1210. Optionally, the second bending portion 121 is configured such that, during the switching of the frame 1 to the folded state, the locking joint 15 can be accommodated in the second avoidance space 1210, so that the rear leg rod 12 does not restrict the pivoting of the handlebar 14 relative to the front leg rod 11; when the frame 1 completely gets into the folded state, at least half of the axial extension length of the handlebar 14 can be located in the second avoidance space 1210 (as shown in FIG. 13), and a part of the rear leg rod 12 abuts against an upper side of the handlebar 14, so that the structure of the folded frame 1 is more compact, thus further reducing the sizes of the folded frame 1 in the length direction L and the height direction H.

Referring to FIG. 9 and FIG. 13 together, in this embodiment, an end of the linkage rod 18 is pivotably connected to the support frame 13, and the other end of the linkage rod 18 protrudes towards the exterior of the frame 1 in the width direction W to be pivotably connected to the front leg rod 11. The pivot point of the rear leg rod 12 and the handlebar 14 is located on a lower side of the handlebar 14 in the height direction H, and the projection of the pivot track of the rear leg rod 12 in the height direction H at least partially overlaps the projection of the pivot track of the front leg rod 11 and/or the handlebar 14 in the height direction H.

Referring to FIG. 10 to FIG. 13 together, when the frame 1 is switched from the unfolded state to the folded state, the handlebar 14 and the rear leg rod 12 pivot towards the front of the frame 1, the front leg rod 11 pivots towards the rear of the frame 1, and the first rod 100, the front leg rod 11, the rear leg rod 12, and the handlebar 14 no longer maintain the roughly triangular structure. During the folding process, the handlebar 14, the front leg rod 11, and the rear leg rod 12 gradually approach the chassis 10 until the handlebar 14, the front leg rod 11, the rear leg rod 12, and the chassis 10 are closely stacked in the height direction H. In this case, at least part of the front leg rod 11 is located in the first avoidance space 10010, and at least part of the handlebar 14 is located in the second avoidance space 1210, so that the frame 1 is switched to the folded state, as shown in FIG. 13. Compared with the unfolded state, the sizes of the frame 1 in the folded state in the height direction H and the length direction L are significantly reduced, and thus, the frame can be easily accommodated and stored, for example, in a trunk of an automobile. Further, due to the significant reduction in size of the frame 1, the user can more easily lift and carry the stroller. Further, in this embodiment, a certain offset distance exists between a pivot position of the support frame 13 and the locking joint 15, or more precisely, a pivot position of the support frame 13 and the handlebar 14 and the middle portion of the support frame 13. Specifically, the pivot position of the support frame 13 and the handlebar 14 is offset towards a side of the support frame 13 away from the linkage rod 18. The linkage rod 18 is arranged between the support frame 13 and the front leg rod 11, and when the frame 1 is in the unfolded state, the pivot point of the linkage rod 18 on the support frame 13 and the pivot point of the locking joint 15 on the support frame 13 (or the pivot point of the handlebar 14 on the support frame 13) approximately have the same height in the height direction H, and the linkage rod and the locking joint support the support frame 13 together, so that the support frame 13 is in the stable and non-pivotable state. When the frame 1 is switched from the unfolded state to the folded state, the linkage rod 18 pivots towards the front of the frame 1, the height of the pivot point of the linkage rod 18 on the support frame 13 in the height direction H is gradually reduced, and meanwhile, with the pivoting of the handlebar 14 towards the front of the frame 1, the height of the pivot point of the locking joint 15 on the support frame 13 (or the pivot point of the handlebar 14 on the support frame 13) in the height direction H is also gradually reduced. In this process, the speed of the reduction of the height of the pivot point of the linkage rod 18 on the support frame 13 in the height direction H is substantially the same as that of the reduction of the height of the pivot point of the locking joint 15 on the support frame 13 (or the pivot point of the handlebar 14 on the support frame 13) in the height direction H, so that the support frame 13 hardly pivots relative to a plane parallel to the length direction L and the width direction W during the folding process, and the support frame 13 is kept in a roughly horizontal state, as shown in FIG. 10 to FIG. 12. Finally, the support frame 13, the handlebar 14, the front leg rod 11, the rear leg rod 12, and the chassis 10 are closely stacked together in the height direction H. The design of this embodiment brings at least the following beneficial effects.
1. Accidental pinching or impact on a part of the body of the user such as the hand or the knee caused by pivoting of the support frame 13 is avoided;
2. When the support frame 13 is sleeved with a cloth cover, the support frame 13 and the cloth cover are together lowered and folded in a substantially horizontal posture, and compared with the embodiment shown in FIG. 1, materials at different positions of the cloth cover can be more uniformly compressed and folded, so that the folded cloth cover is smoother.

With continued reference to FIG. 9, in this embodiment, a second reinforcing rod 102 is arranged between the two first rods 100, and the second reinforcing rod 102 is configured to enhance the overall structural stability of the chassis 10. In particular, the second reinforcing rod 102 is configured to increase structural stability at the first bending portion 1001. Optionally, two ends of the second reinforcing rod 102 are connected to the first bending portions 1001 of the two first rods 100 respectively. Optionally, the second reinforcing rod 102 is configured in an arc-shaped structure.

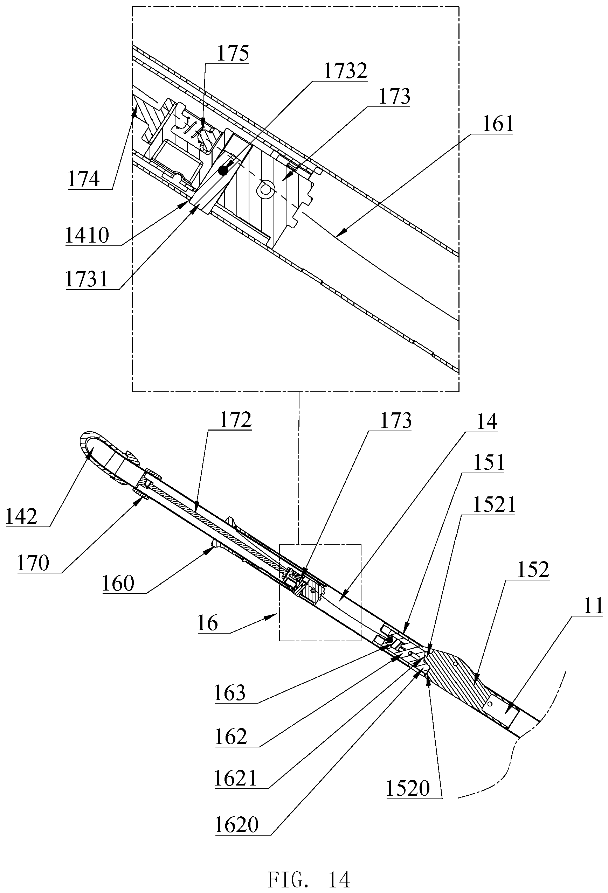

Referring to FIG. 9 and FIG. 14 together, in this embodiment, the adjustment button 170 is a push button sleeving the inner rod 140, and the adjustment button 170 is slidable along an axial direction of the inner rod 140 between the adjustment position and the fixed position. When the user pushes and pulls the adjustment button 170 to slide the adjustment button 170 from the fixed position to the adjustment position, the adjustment button 170 drives the adjustment member 173 to slide into an adjustment state through the second connecting member 172, so as to allow the inner rod 140 and the outer rod 141 to slide relative to each other, thereby allowing adjustment of the length and height of the handlebar 14.

An embodiment of the present application further provides a stroller, including the frame 1 according to any one of the embodiments of the present application and a cloth cover (not shown) sleeving the support frame 13. The support frame 13 and the cloth cover together form a storage space of the stroller.

The embodiment shown in FIG. 1 is taken as an example below to describe the folding process of the frame 1 according to the embodiment of the present application. As shown in FIG. 1 and FIG. 2, the frame 1 is in the unfolded state. During folding, first, the mechanism such as the sleeping basket or the safety seat connected to the seat fixing mechanism 132 is removed, and the seat fixing mechanism 132 is adjusted to an accommodating posture shown in FIG. 1. The pull rod 19 is pivoted and slid to the accommodated position. The sunshade assembly 131 is adjusted to an accommodating posture, as shown in FIG. 3. Then, the user pushes and pulls the release operating member 160 and pushes the handlebar 14 to pivot towards the front of the frame 1, so that the handlebar 14 drives the rear leg rod 12 to pivot towards the front of the frame 1 and drives the front leg rod 11 to pivot towards the rear of the frame 1. When the handlebar 14 moves past a vertical position (i.e., a position where axial extension of the handlebar 14 is parallel to the height direction H), the user does not need to continuously push the handlebar 14, and the handlebar 14, the front leg rod 11, and the rear leg rod 12 gradually approach the chassis 10 under the action of gravity until the handlebar 14, the front leg rod 11, the rear leg rod 12, and the chassis 10 are closely stacked in the height direction H, and the frame 1 is switched into the folded state, as shown in FIG. 5 and FIG. 6. Finally, the user hooks the fold hook 1002 on the connecting protrusion 143 to keep the frame 1 in the folded state, so as to avoid accident unfolding.

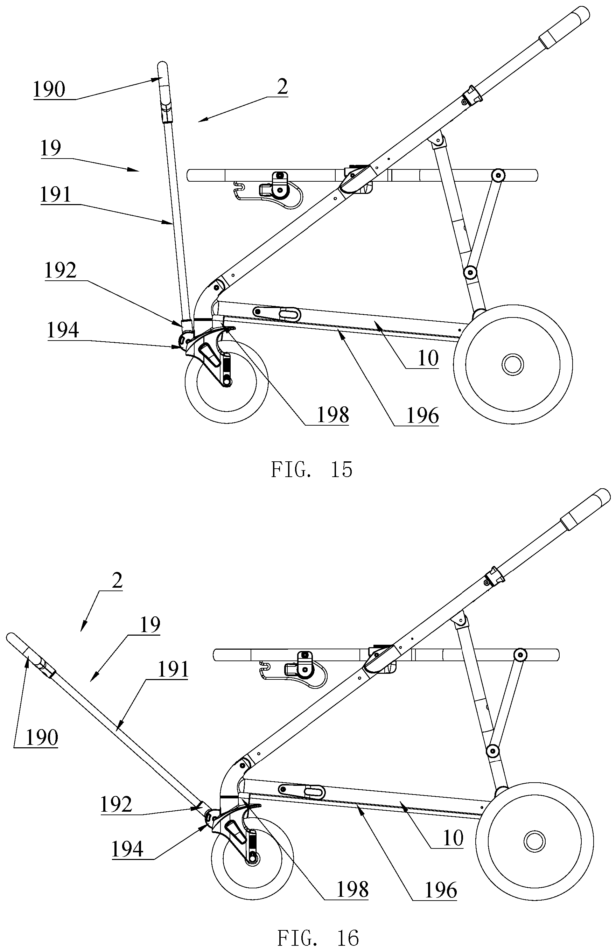

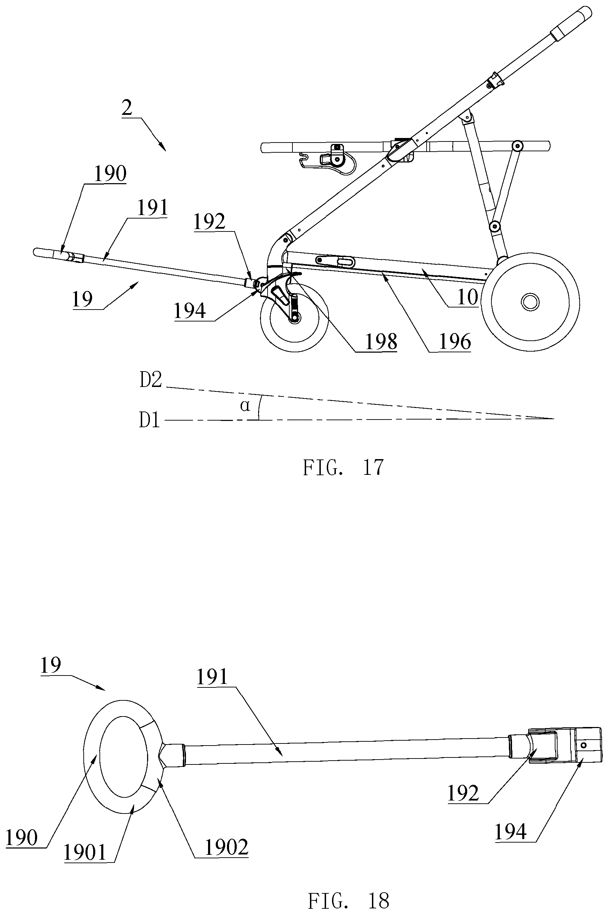

Referring to FIG. 15 to FIG. 17, an embodiment of the present application provides a stroller, including: a chassis 10 and a pull rod mechanism 2, the pull rod mechanism 2 being connected to the chassis 10. The pull rod mechanism 2 includes: a pull rod 19; a rotating portion 192; and a third connecting base 194. An end of the pull rod 19 is connected to the rotating portion 192, and the rotating portion 192 is connected to the third connecting base 194 and can pivot between a first pivot position and a second pivot position. With reference to the chassis 10 or the rotating portion 192, when the pull rod 19 is at the first pivot position, the pull rod 19 is at a first angle, and when the pull rod 19 is at the second pivot position, the pull rod 19 is at a second angle. In other words, the pull rod 19 can pivot between the first angle and the second angle relative to the chassis 10 (or the third connecting base 194). Specifically, when the rotating portion 192 pivots to the first pivot position, the pull rod 19 pivots to an erect position, as shown in FIG. 15. When the rotating portion 192 pivots to the second pivot position, the pull rod 19 pivots to a lying position, as shown in FIG. 17. When the user pulls the stroller through the pull rod 19, the pull rod 19 and the rotating portion 192 pivot to a use position relatively matching a height and arm length of the user, for example, a position of the pull rod 19 in FIG. 16, so as to facilitate working of the user.

As shown in FIG. 18, in an embodiment, the pull rod 19 includes a handle 190 and a connecting rod 191. The handle 190 is configured in a roughly annular structure to facilitate gripping by the user. It should be noted that the roughly annular structure is only an optional embodiment of the structure of the handle, and those skilled in the art may select handles with other structural forms such as a polygonal shape, a straight shape, a T shape, and a cross shape according to use requirements, as long as the requirement of the user for gripping the handle can be met, and the present application has no limitation on the handle. In the embodiment shown in FIG. 18, the handle 19 includes a mounting portion 1902 and a grip 1901 for the user to grip. An end of the mounting portion 1902 is connected to an end of the connecting rod 191, and the other end of the mounting portion 1902 is connected to the grip 1901. Optionally, the grip 1901 is configured in a rough C shape, the mounting portion 1902 is configured in a rough T shape, two end portions of the C-shaped grip 1901 are connected to two end portions of the T-shaped mounting portion 1902 respectively, and the other end portion of the T-shaped mounting portion 1902 is connected to an end of the connecting rod 191. Optionally, the mounting portion 1902 and the grip 1901 are integrally formed. Optionally, the grip 1901 is made of an anti-slip material such as rubber material or plastic material. Preferably, a surface of the grip 1901 is provided with an anti-slip structure such as anti-slip lines or anti-slip projections. The other end of the connecting rod 191 is connected to the rotating portion 192. Optionally, the mounting portion 1902, the grip 1901, and the connecting rod 191 are integrally formed.

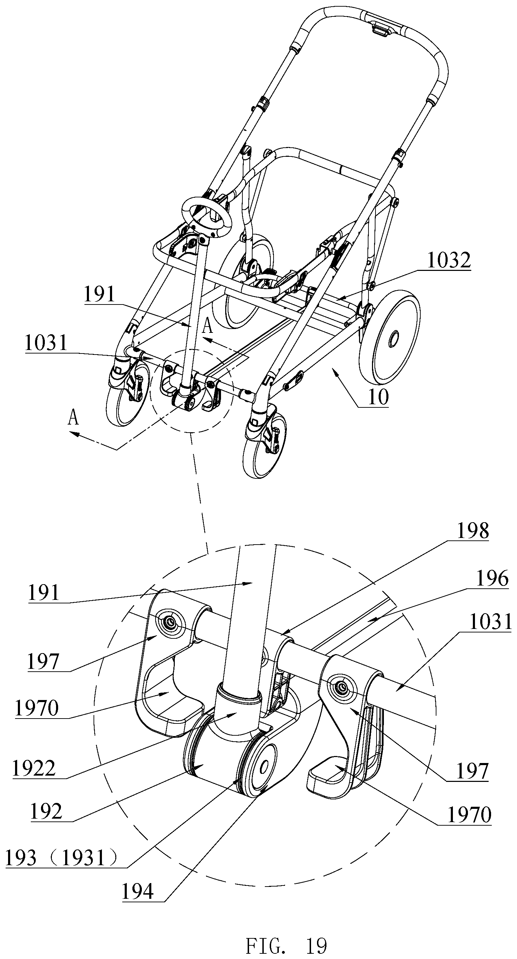

Referring to FIG. 19, FIG. 20, and FIG. 23, in an embodiment, the rotating portion 192 includes: a body 1921 and a connecting end 1922. The body 1921 is configured in a roughly cylindrical structure and is pivotable about an axial direction of the cylinder. It should be noted that the roughly cylindrical structure is only an optional embodiment of the present application, and those skilled in the art can select other suitable shapes such as a cube and a polyhedron for the body of the rotating portion according to actual needs, which is not limited in the present application. The connecting end 1922 is configured as a protrusion protruding from a cylindrical curved surface of the body 1921, the protrusion is provided with a first connecting hole 19220, and the other end of the connecting rod 191 is inserted into the first connecting hole 19220. A receiving cavity 19221 in communication with the first connecting hole 19220 is arranged in the body 1921, each of two end surfaces of the body 1921 is provided with a second pivot hole 1924, and the second pivot hole 1924 is in communication with the receiving cavity 19221. The other end of the connecting rod 191 passes through the first connecting hole 19220 to be received in the receiving cavity 19221, and the other end of the connecting rod 191 is provided with a first pivot hole 1910 through the connecting rod 191.

Referring to FIG. 19 to FIG. 21 and FIG. 23, in an embodiment, an end of the third connecting base 194 is recessed inwards to form a pivot space 1944, the pivot space 1944 is configured in a roughly cylindrical shape matching a shape of the body 1921 of the rotating portion 192, and the body 1921 of the rotating portion 192 is pivotably arranged in the pivot space 1944. It should be noted that the roughly cylindrical structure is only an optional embodiment of the present application, and those skilled in the art can select other suitable shapes such as a cube and a polyhedron for the pivot space of the connecting base according to actual needs, as long as the body 1921 of the rotating portion 192 can be allowed to pivot in the pivot space 1944, and the present application has no limitation on the pivot space. A side wall of the pivot space 1944 is provided with a fourth pivot hole 1943 in communication with the pivot space 1944.

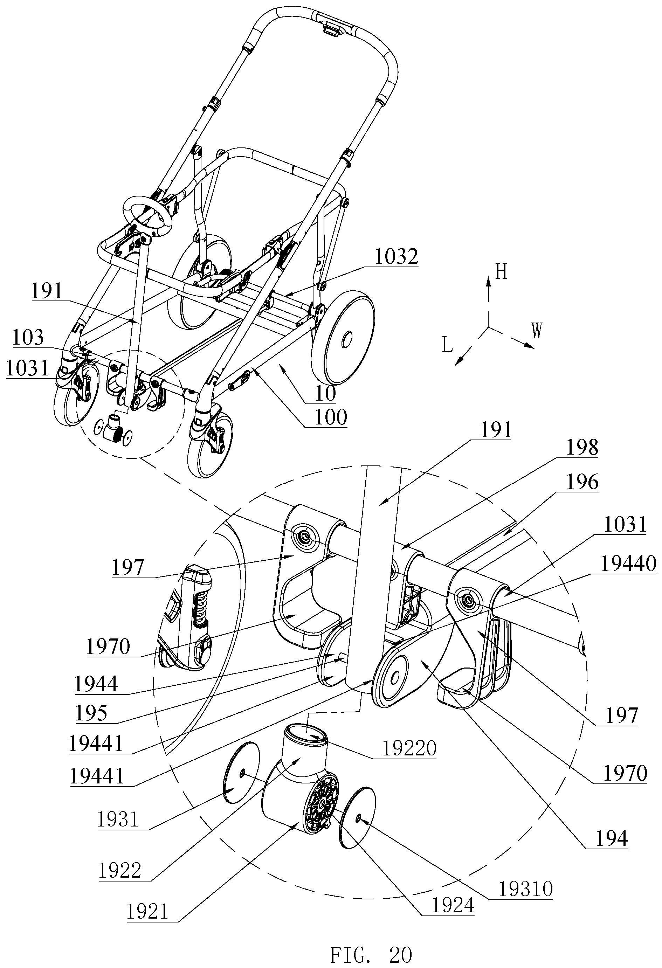

Referring to FIG. 19 and FIG. 20, in an embodiment, a first positioning member 193 is arranged between the third connecting base 194 and the rotating portion 192, and the first positioning member 193 allows the pull rod 19 to be positioned at a plurality of different pivot angles relative to the third connecting base 194. It can be understood that the first positioning member 193 limits the pull rod 19, so that the pull rod 19 has a plurality of different positioning angles relative to the third connecting base 194. The first positioning member 193 is configured to restrict pivoting of the rotating portion 192. Specifically, the first positioning member 193 is located between an inner surface of a side wall of the pivot space 1944 of the third connecting base 194 and an end surface of the body 1921 of the rotating portion 192. Optionally, the first positioning member 193 is a damping plate 1931, the damping plate 1931 has a thickness slightly greater than a gap between the inner surface of the side wall of the pivot space 1944 (i.e., an inner wall of the pivot space 1944) and the end surface of the body 1921 (i.e., a side wall surface of the body 1921 facing the inner wall of the pivot space 1944), so that the damping plate 1931 is clamped between the inner surface of the side wall of the pivot space 1944 and the end surface of the body 1921. When the rotating portion 192 has a tendency to pivot relative to the third connecting base 194, static friction forces exist between the damping plate 1931 and the side wall of the pivot space 1944 and between the damping plate 1931 and the end surface of the body 1921, and a resultant force of these static friction forces prevents the rotating portion 192 from pivoting relative to the third connecting base 194. In this embodiment, a clamping force (pressure) applied by the inner surface of the side wall of the pivot space 1944 and the end surface of the body 1921 to the damping plate 1931 is set such that a moment caused by the resultant force of the static friction forces generated by the clamping force (pressure) and applied by the damping plate 1931 to the side wall of the pivot space 1944 and the end surface of the body 1921 is not smaller than a moment caused by gravity of the pull rod 19 and the rotating portion 192. Thus, when the user does not apply any external force to the pull rod mechanism 2, the pull rod 19 and the rotating portion 192 can be kept at their original positions without pivoting. With such a design, the pull rod 19 can be kept at any use position (e.g., the position of the pull rod 19 in FIG. 16). Thus, when the user releases the grip of the pull rod 19, the pull rod 19 does not suddenly pivot or fall towards a support surface under own gravity, thereby improving use safety of the stroller and facilitating the user to grip the pull rod 19 again. Further, when the user applies a pulling force or a pushing force to the pull rod 19, if a total moment causing the pull rod 19 and the rotating portion 192 to have a pivot tendency is larger than the moment caused by the resultant force of the static friction forces capable of being generated by the clamping force (pressure) and applied by the damping plate 1931 to the side wall of the pivot space 1944 and the end surface of the body 1921, the pull rod 19 and the rotating portion 192 pivot. With such a design, the use position of the pull rod 19 can be adjusted and positioned, the user can adjust the pull rod 19 to any position between the first pivot position and the second pivot position, a use angle of the pull rod 19 can be adjusted steplessly, and applicability is wider.

In an embodiment, optionally, the damping plate 1931 is a flexible component. Optionally, the damping plate 1931 is made of at least one of: soft colloid; rubber material; and plastic material. Optionally, the damping plate 1931 may be made of a HYTREL material.

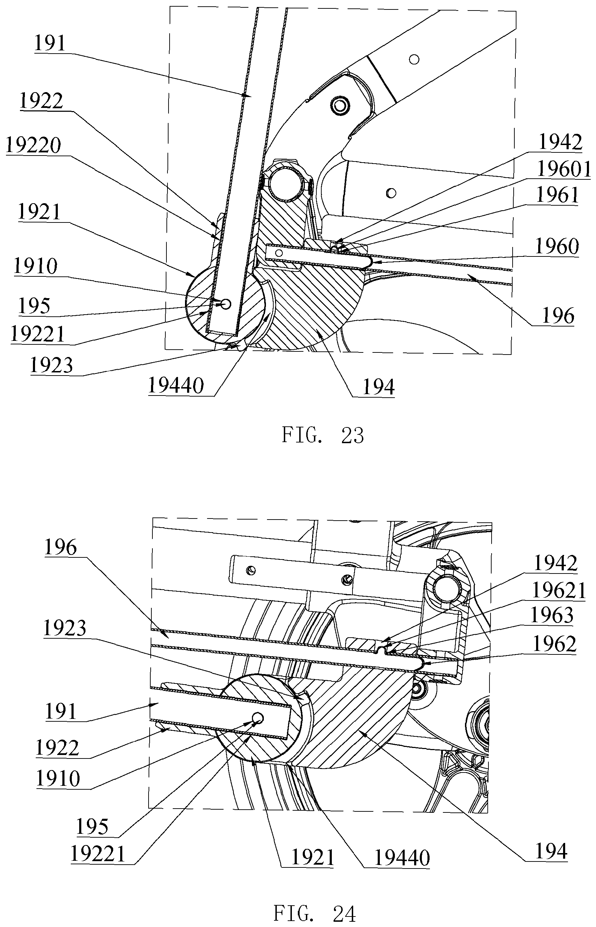

Referring to FIG. 20 and FIG. 23, in an embodiment, one damping plate 1931 is arranged between each of the two end surfaces of the body 1921 and the side wall of the pivot space 1944. The damping plate 1931 is provided with a third pivot hole 19310, and when the connecting rod 191, the rotating portion 192, the damping plate 1931, and the third connecting base 194 are assembled together, a pivot pin 195 is inserted through the fourth pivot hole 1943, the third pivot hole 19310, the second pivot hole 1924, and the first pivot hole 1910 in sequence, thereby realizing the pivotable connection of the connecting rod 191 and the rotating portion 192 and the positioning of the damping plate 1931 (preventing the damping plate 1931 from slipping out of the gap between the inner surface of the side wall of the pivot space 1944 and the end surface of the body 1921). Optionally, an inner diameter of the first connecting hole 19220 is slightly smaller than an outer diameter of the connecting rod 191 to avoid the connecting rod 191 shaking within the first connecting hole 19220.

Referring to FIG. 23, in an embodiment, a limiting protrusion 1923 is arranged on an outer surface of the body 1921 of the rotating portion 192, a limiting groove 19440 is arranged in the inner wall of the pivot space 1944 of the third connecting base 194, and the limiting protrusion 1923 slides in the limiting groove 19440 when the rotating portion 192 pivots. When the rotating portion 192 pivots from the first pivot position to the second pivot position, that is, the pull rod 19 pivots from the erect position to the lying position, the limiting protrusion 1923 abuts against a side wall of the limiting groove 19440 to restrict the rotating portion 192 from continuously pivoting. By providing the limiting protrusion 1923 and the limiting groove 19440, a rotation range of the pull rod 19 can be limited, so that the pull rod 19 still has a certain distance from the support surface (e.g., the ground) of the stroller when at the lying position, thus on the one hand, avoiding that the pull rod 19 contacts the support surface (e.g., the ground) of the stroller due to "excessive lying", which causes contamination or abrasion of the handle 190, and on the other hand, facilitating the user to grasp the pull rod 19 at the lying position to achieve convenient and practical effects. It should be noted that although the limiting protrusion 1923 is arranged on the body 1921 of the rotating portion 192 and the limiting groove 19440 is arranged in the inner wall of the pivot space 1944 of the third connecting base 194 in this embodiment, this is only an optional embodiment, and those skilled in the art can adjust arrangement positions of the limiting protrusion and the limiting groove according to actual needs as long as the pivoting of the rotating portion can be limited to avoid "excessive lying". For example, the limiting protrusion may be arranged on the inner wall of the pivot space of the third connecting base, and the limiting groove may be arranged in the body of the rotating portion.

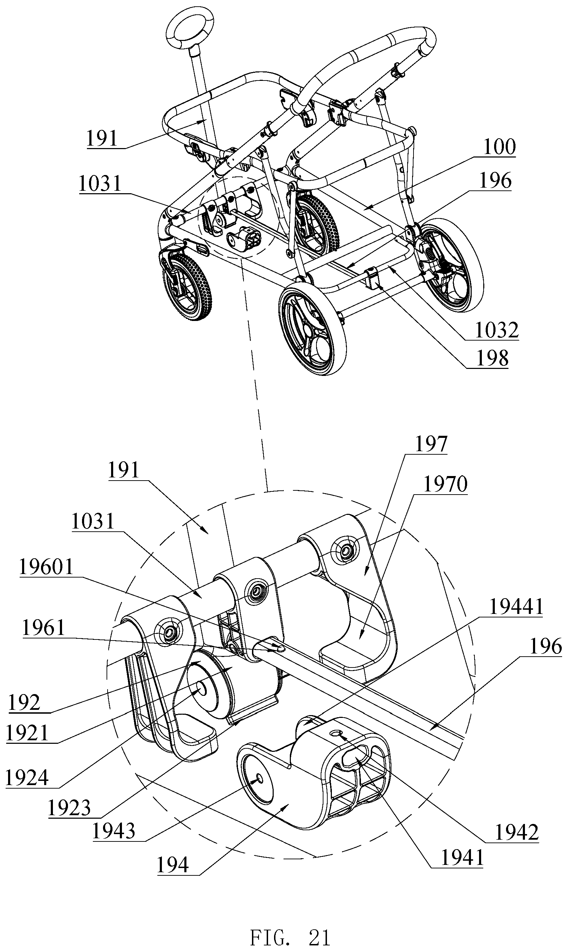

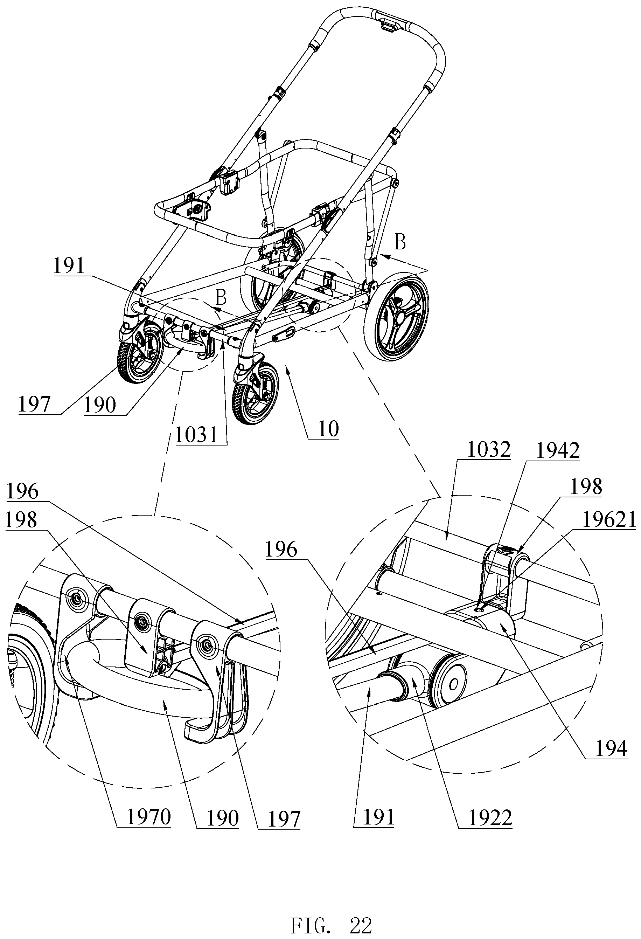

Referring to FIG. 21 and FIG. 22, in an embodiment, an end of the third connecting base 194 opposite to the pivot space 1944 is provided with a first through hole 1941, and the first through hole 1941 slidably sleeves the sliding rail 196. The third connecting base 194 is slidable along the sliding rail 196 between a first sliding position and a second sliding position. When the third connecting base 194 slides to the first sliding position, the pull rod 19 slides to an extend position, as shown in FIG. 21. When the third connecting base 194 slides to the second sliding position, the pull rod 19 slides to an accommodated position, as shown in FIG. 22. Thus, when the user does not need to use the pull rod 19 or needs to fold the stroller, the pull rod 19 can be slid to the accommodated position to prevent the pull rod 19 from affecting the working of the user, and to facilitate the folding of the stroller.

Referring to FIG. 21 and FIG. 23, in an embodiment, a side wall of the first through hole 1941 is provided with a second through hole 1942. A second positioning hole 1961 is arranged in a part of the sliding rail 196 corresponding to the first sliding position of the third connecting base 194, a second positioning member 1960 is arranged in the sliding rail 196, and at least part of the second positioning member 1960 is slidable in the second positioning hole 1961 to retract into and protrude from the second positioning hole 1961. When the third connecting base 194 slides to the first sliding position, at least part of the second positioning member 1960 protrudes from the second positioning hole 1961 and enters the second through hole 1942, so as to lock the third connecting base 194 at the first sliding position, thus preventing undesired sliding of the third connecting base 194 towards the second sliding position and maintaining the pull rod 19 at the extend position. Optionally, the second positioning member 1960 is a spring plate, the spring plate has a first post 19601, and the first post 19601 is slidable in the second positioning hole 1961.

Referring to FIG. 22 and FIG. 24, in an embodiment, a third positioning hole 1963 is arranged in a part of the sliding rail 196 corresponding to the second sliding position of the third connecting base 194, a third positioning member 1962 is arranged in the sliding rail 196, and at least part of the third positioning member 1962 is slidable in the third positioning hole 1963 to retract into and protrude from the third positioning hole 1963. When the third connecting base 194 slides to the second sliding position, at least part of the third positioning member 1962 protrudes from the third positioning hole 1963 and enters the second through hole 1942, so as to lock the third connecting base 194 at the second sliding position, thus preventing undesired sliding of the third connecting base 194 towards the first sliding position and facilitating maintaining of the pull rod 19 at the accommodated position. For example, when the pull rod 19 is at the accommodated position, even if the stroller is supported on an inclined surface or an external force is suddenly applied to the rear of the stroller, the third connecting base 194 can be locked at the second sliding position, thus reducing the risk that the pull rod 19 accidentally extends. Optionally, the third positioning member 1962 is a spring plate, the spring plate has a second post 19621, and the second post 19621 is slidable in the third positioning hole 1963.

Referring to FIG. 20, FIG. 21, and FIG. 22, in an embodiment, the pull rod mechanism 2 further includes: a fixing portion 198, the sliding rail 196 being connected to the fixing portion 198. When the rotating portion 192 pivots from the second pivot position to the first pivot position, the pull rod 19 abuts against a front surface of the fixing portion 198 to restrict the rotating portion 192 from continuing to pivot. In this embodiment, the pull rod mechanism 2 includes a front rod 1031 and a rear rod 1032, the front rod 1031 and the rear rod 1032 being connected to the chassis 10. Optionally, as shown in FIG. 20, the chassis 10 includes two first rods 100 extending in the length direction L of the stroller and two second rods 103 extending in the width direction W of the stroller, and the front rod 1031 and the rear rod 1032 are the two second rods 103 of the chassis 10 respectively. One fixing portion 198 is fixed to each of the front rod 1031 and the rear rod 1032, and two ends of the sliding rail 196 are connected to the two fixing portions 198 respectively. When the rotating portion 192 pivots from the second pivot position to the first pivot position, the pull rod 19 abuts against a front surface of the fixing portion 198 fixed to the front rod 1031 to restrict the rotating portion 192 from continuing to pivot. For convenience of description, terms indicating relative positions such as "up", "down", "front", and "rear" are used in the present application, and these terms indicating relative positions are referred to with reference to the direction shown in FIG. 15. Specifically, in FIG. 15, the relative upper part is referred to as "up", the relative lower part is referred to as "lower", the relative left part is referred to as "front", and the relative right part is referred to as "rear".

Referring to FIG. 19 and FIG. 22, in an embodiment, the pull rod mechanism 2 further includes at least one accommodating member 197, the accommodating member 197 being arranged on the front rod 1031, and an accommodating groove 1970 being arranged in the accommodating member 197. When the pull rod 19 slides to the accommodated position, at least part of the pull rod 19 is accommodated in the accommodating groove 1970. In this embodiment, the accommodating member 197 has a hook shape, but this is merely exemplary, and in other embodiments, the accommodating member 197 may be configured in other suitable shapes, which is not limited in the present application. Optionally, when the pull rod 19 slides to the accommodated position, the handle 190 of the pull rod 19 is accommodated in the accommodating groove 1970. Optionally, the pull rod mechanism 2 includes two accommodating members 197, the two accommodating members 197 are spaced apart by the fixing portion 198 arranged on the front rod 1031, and openings of the accommodating grooves 1970 of the two accommodating members 197 are arranged opposite to each other. When the pull rod 19 slides to the accommodated position, at least part of the pull rod 19, for example, the handle 190, is accommodated in the two accommodating grooves 1970.

Referring again to FIG. 17, in an embodiment, a certain included angle α is formed between an extension direction D2 of the sliding rail 196 and a plane D1 of the support surface, and when the pull rod 19 is in a lying state, an extension direction of the pull rod 19 is substantially parallel to the extension direction D2 of the sliding rail 196. With such a design, on the one hand, when the pull rod 19 is in the lying state, the handle 190 has a certain distance from the support surface, which facilitates the user to grasp the handle 190 again; on the other hand, the included angle α makes pulling and pushing actions of the pull rod 19 more ergonomic, so that the operation of pulling and pushing the pull rod 19 by the user is more comfortable.

The working principle of the pull rod mechanism 2 according to the embodiment of the present application will be described below with the embodiment shown in FIG. 15 to FIG. 24 as an example.

As shown in FIG. 22, the pull rod 19 is at the accommodated position and accommodated below the chassis 10 of the stroller. In this case, the second post 19621 passes through the third positioning hole 1963 into the second through hole 1942, as shown in FIG. 24, and the third connecting base 194 is kept at the second sliding position. That is, the pull rod 19 is kept at the accommodated position, and the pull rod 19 is not separated from the accommodated position without pulling out the pull rod 19 by an external force. In this state, an influence of the pull rod 19 on an overall volume of the stroller is quite small, and a folding operation of the stroller is not affected.

When the user needs to pull the stroller using the pull rod 19, the user grips the handle 190 of the pull rod 19 and applies a pulling force to the pull rod 19 towards the front of the stroller, and when the pulling force is enough to overcome an elastic force of the elastic sheet, the second post 19621 is withdrawn out of the second through hole 1942, thereby releasing the keeping of the third connecting base 194. The pulling force is continuously applied to pull the pull rod 19 from the accommodated position to the extend position, as shown in FIG. 17. The above pulling operation is ergonomic due to the included angle α between the sliding rail 196 and the support surface, and is therefore relatively comfortable for the user.

When the pull rod 19 reaches the extend position, the first post 19601 passes through the second positioning hole 1961 into the second through hole 1942, as shown in FIG. 23, and the third connecting base 194 is kept at the first sliding position. That is, the pull rod 19 is kept at the extend position, and the pull rod 19 is not separated from the extend position without any external force. In this case, the user continuously applies the pulling force to the pull rod 19 to pull the stroller. In this process, based on the height and arm length of the user, the rotating portion 192 and the pull rod 19 pivot to a use position suitable for the user (e.g., the position of the pull rod 19 in FIG. 16).

During the pulling of the stroller, if the user ceases the pulling and releases the grip of the pull rod 19, the pull rod 19 is kept at the position where the pull rod 19 is located at the moment when the user releases the pull rod 19 under the action of the first positioning member 193 (for example, the damping plate), and the pull rod 19 cannot pivot autonomously towards the support surface due to own gravity. The user can again grip the pull rod 19 from the position in which the pull rod is released, so as to continuously pull the stroller.

If the pull rod 19 is required to be pivoted to the erect position (as shown in FIG. 15), only a pushing force is required to be applied to the pull rod 19 to pivot the pull rod 19 to the erect position. In this case, since the pull rod abuts against the front surface of the fixing portion 198 fixed to the front rod 1031, the pull rod 19 cannot pivot continuously. Therefore, interference with other components of the stroller caused by excessive pivoting of the pull rod 19 towards the stroller is avoided, the pull rod 19 is prevented from pressing items stored in the stroller, and an accident injury of the pull rod 19 to a child in the sleeping basket mounted on the stroller is further avoided.

After the pull rod 19 is used, the user may pivot the pull rod 19 to the lying position and push the pull rod 19 towards the rear of the stroller, and when the applied pushing force is enough to overcome the elastic force of the elastic sheet, the first post 19601 is withdrawn from the second through hole 1942, thus releasing the holding of the third connecting base 194. The pushing force is continuously applied to push the pull rod 19 from the extend position to the accommodated position, as shown in FIG. 22. In this case, the second post 19621 passes through the third positioning hole 1963 into the second through hole 1942 (as shown in FIG. 24), and the third connecting base 194 is kept at the second sliding position. That is, the pull rod 19 is kept at the accommodated position, and the pull rod 19 is not separated from the accommodated position without intervention of an external force. As the pull rod 19 enters the accommodated position, the handle 190 enters the accommodating groove 1970.

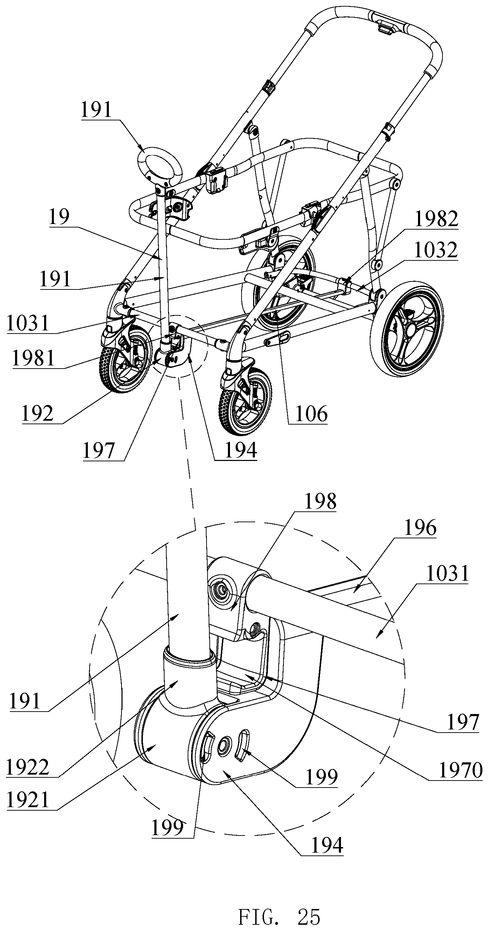

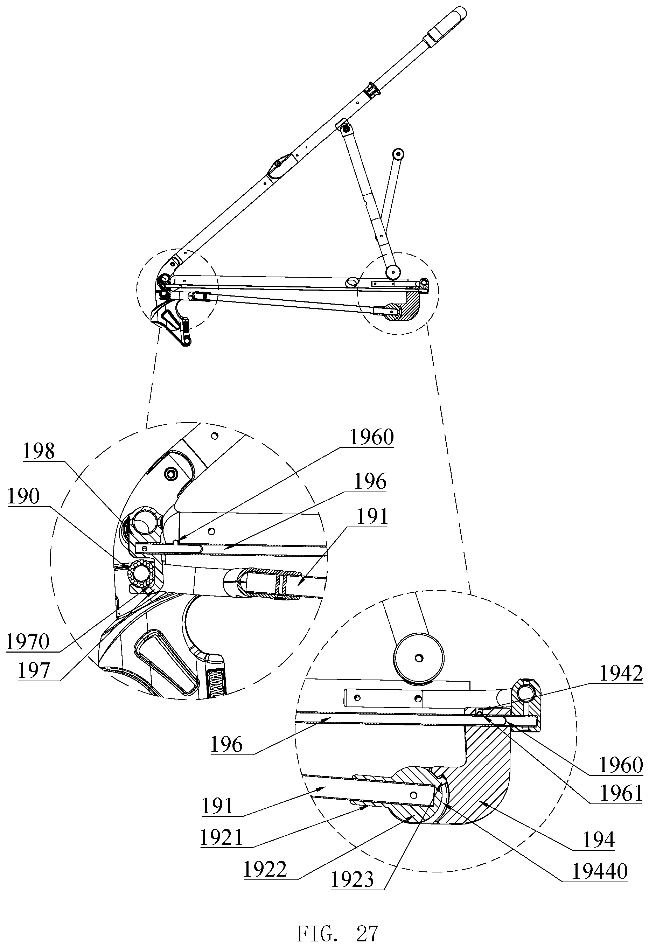

FIG. 25 to FIG. 29 show another embodiment according to the present application, which is substantially the same in structure as the pull rod mechanism 2 according to the foregoing embodiment, and only the difference between the two is described below.

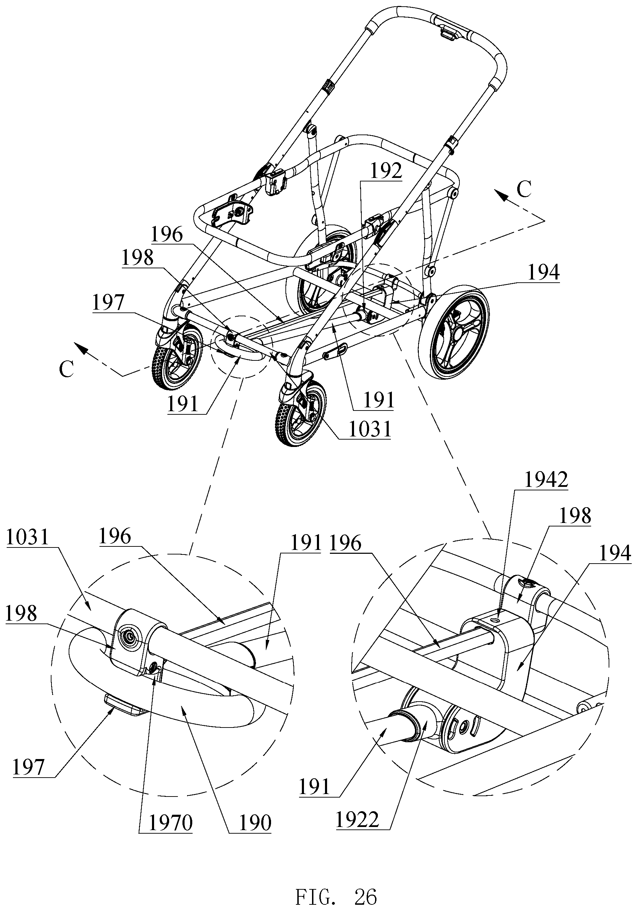

Referring to FIG. 25 and FIG. 26, in an embodiment, the pull rod mechanism 2 includes an accommodating member 197, the accommodating member 197 is arranged on a lower side of the fixing portion 198 fixed to the front rod 1031, and an opening of an accommodating groove 1970 of the accommodating member 197 faces the front of the fixing portion 198. Optionally, the accommodating member 197 is integrally formed with the fixing portion 198. When the pull rod 19 slides to the accommodated position, at least part of the pull rod 19, for example, the handle 190, enters and is accommodated in the accommodating groove 1970. In this embodiment, the opening of the accommodating groove 1970 faces the front, so that the user more easily removes and puts the handle 190 into the accommodating groove 1970. In this embodiment, a part of the handle 190 is accommodated in the accommodating groove 1970, and the user can pull the pull rod 190 to the extend position by griping a front end of the handle 190.

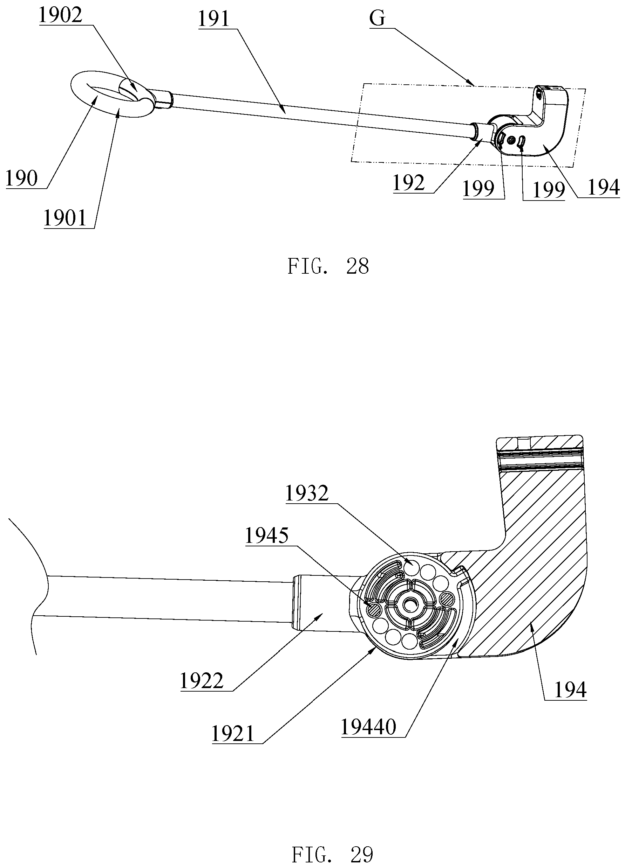

Referring to FIG. 28 and FIG. 29, in an embodiment, an end of the third connecting base 194 is recessed inwards to form a pivot space 1944, and at least part of the rotating portion 192 is received in the pivot space. An inner surface of at least one side wall of the pivot space faces at least one surface of the rotating portion. One of the surface of the rotating portion 192 and the side wall of the pivot space which face each other is provided with at least one elastic finger 199. The other of the surface of the rotating portion 192 and the side wall of the pivot space which face each other is provided with a plurality of positioning recesses 1932. A positioning protrusion 1945 is arranged on a side of the elastic finger 199 facing the positioning recess 1932, and the positioning protrusion 1945 can be engaged with one of the positioning recesses 1932 to position the pull rod at one of a plurality of pivot angles.

With continued reference to FIG. 28 and FIG. 29, in an embodiment, the first positioning member 193 includes a positioning recess 1932 and a positioning protrusion 1945 which have engaged shapes. In order to clearly show structures of the positioning recess 1932 and the positioning protrusion 1945, a partial structure of an inner wall of the pivot space 1944 is removed in FIG. 29. In the embodiment shown in FIG. 29, at least one positioning recess 1932 is arranged in the end surface of the body 1921 of the rotating portion 192, and at least one positioning protrusion 1945 is arranged on the inner wall of the pivot space 1944 (inner surface of the side wall of the pivot space). As the rotating portion 192 pivots, when the positioning protrusion 1945 enters the positioning recess 1932, the positioning protrusion 1945 is restricted in the positioning recess 1932 by the shape engagement thereof, thereby restricting further pivoting of the rotating portion 192, and maintaining the pull rod 19 at the corresponding use position. Optionally, the positioning recess 1932 and the positioning protrusion 1945 may be arranged at opposite positions. That is, the at least one positioning recess 1932 is arranged in the inner wall of the pivot space 1944, and the at least one positioning protrusion 1945 is arranged on the end surface of the body 1921 of the rotating portion 192. Optionally, more than one positioning recess 1932 is provided to realize retention of the pull rod 19 at more than one working position. Preferably, two sets of positioning recesses 1932 are provided, each set of positioning recesses 1932 including more than one positioning recess 1932, and two positioning protrusions 1945 are provided, each of the two positioning protrusions 1945 being engaged with one set of positioning recesses 1932. More preferably, each set of positioning recesses 1932 includes four positioning recesses 1932 to realize the retention of the pull rod 19 at four different working positions, as shown in FIG. 29. In other embodiments, the number of the positioning protrusions 1945 on each inner wall of the pivot space 1944 may not be limited to two. For example, the positioning protrusions 1945 on each inner wall of the pivot space 1944 may be one or three or four, or the like. In addition, the number of the positioning recesses 1932 in each set is not limited to four, may be any number more than two, and may be set according to desired adjustment positions, for example, three or five, or the like.

For the embodiment shown in FIG. 25 to FIG. 29, the working principle is substantially the same as that of the previous embodiment, except that during the pulling of the stroller, if the user ceases pulling and releases the grip of the pull rod 19, and the positioning protrusion 1945 of the first positioning member 193 is located in the positioning recess 1932 in this case, the pull rod 19 is kept at a position where the pull rod 19 is located at the moment when the user releases the pull rod 19. If the positioning protrusion 1945 of the first positioning member 193 is not engaged in the positioning recess 1932 in this case, the pull rod 19 pivots slightly towards the support surface by own gravity until the positioning protrusion 1945 enters and is engaged in the positioning recess 1932, and the pull rod 19 is kept at a position where the pull rod 19 is located at the moment when the positioning protrusion 1945 enters and is engaged in the positioning recess 1932. In such an embodiment, the pull rod 19 may still be kept at or near the use position, thus avoiding the risk that the pull rod 19 pivots to the support surface by own gravity to injure the user.

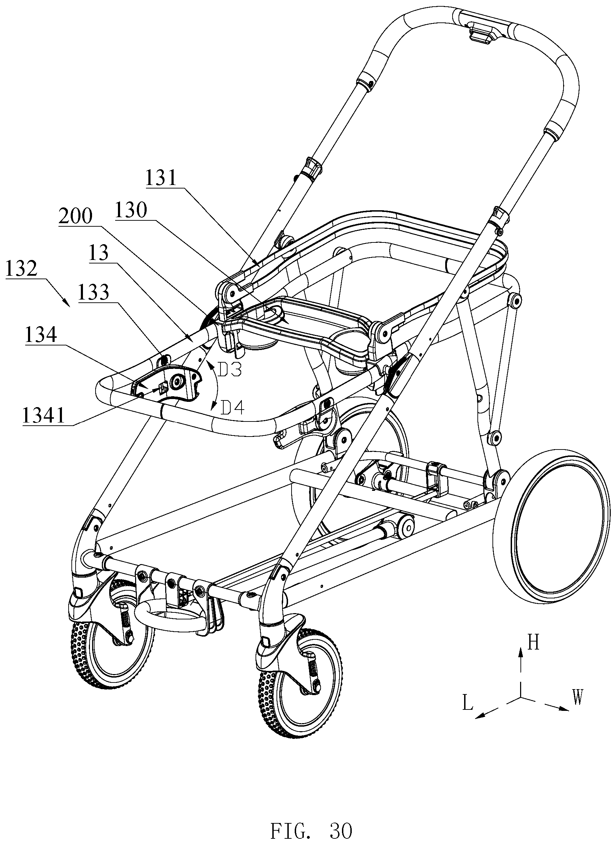

Referring to FIG. 30 to FIG. 33, an embodiment of the present application provides a seat fixing mechanism 132, including: a fixed base 133 and an engaging base 134. The engaging base 134 is slidably connected to the fixed base 133, and the engaging base 134 can move, for example, slide, between a folded position and an unfolded position. A distance of the engaging base 134 from the fixed base 133 at the unfolded position is great than the distance of the engaging base 134 from the fixed base 133 at the folded position. In this embodiment, the engaging base 134 is further configured to be pivotable relative to the fixed base 133, and when the engaging base 134 moves between the unfolded position and the folded position, the engaging base 134 is angularly deflected relative to the fixed base 133. Certainly, the pivoting of the engaging base 134 relative to the fixed base 133 is only an optional embodiment of the present application, and in other embodiments, the engaging base 134 may be configured to be non-pivotable relative to the fixed base 133, and the engaging base 134 only performs a translational motion between the unfolded position and the folded position.

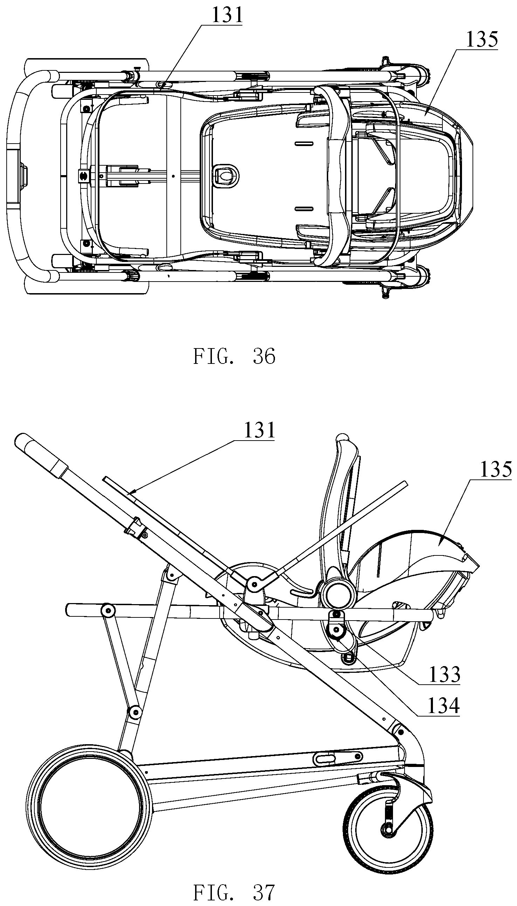

Specifically, in this embodiment, the stroller includes a support frame 13, and one seat fixing mechanism 132 is connected to each of two side rods (i.e., rods extending substantially along the length direction L) of the support frame 13, as shown in FIG. 30. For convenience of description, in the following description, only one of the seat fixing mechanisms 132 will be described, and it should be understood by those skilled in the art that the seat fixing mechanisms 132 arranged on the two side rods have the same structure and pivot between the folded position and the unfolded position simultaneously. It should be noted that in practical use, the engaging bases 134 of the seat fixing mechanisms 132 arranged on the two side rods pivot between the folded position and the unfolded position simultaneously, which is intended to facilitate the folding operation of the stroller and fixedly connect a seat 135 (referring to FIG. 36 and FIG. 37), as is required in practical use scenarios, but this does not mean that the two engaging bases 134 cannot pivot independently.

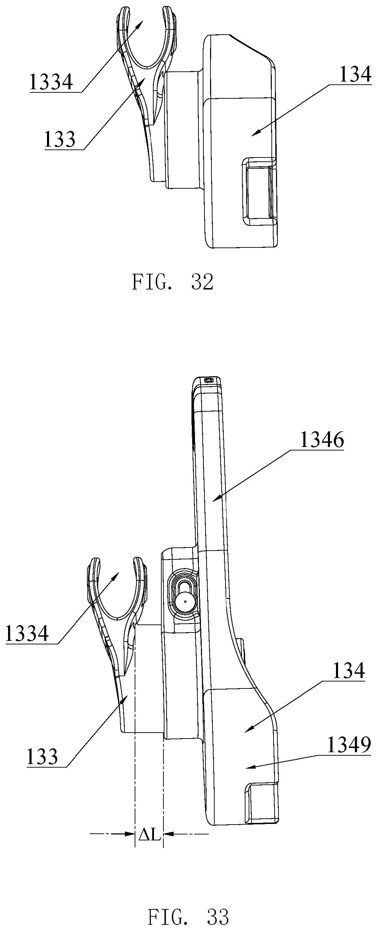

With continued reference to FIG. 30 to FIG. 33, in an embodiment, the engaging base 134 includes: an engagement portion 1346 and a base portion 1349. The engagement portion 1346 is configured to be inserted into an engagement groove (not shown) of the seat 135, and the base portion 1349 is connected to the engagement portion 1346 and pivotably connected to the fixed base 133. Optionally, the engagement portion 1346 is integrally formed with the base portion 1349. Optionally, referring to FIG. 33, the engagement portion 1346 and the base portion 1349 have an arc-shaped transition region therebetween, and a width of the engagement portion 1346 is less than a width of the base portion 1349 to fit a shape of a side wall of the seat 135. It should be noted that the width direction W of the stroller in FIG. 30 (the left-right direction of the page in FIG. 33) also serves as a width direction of the engagement portion 1346.

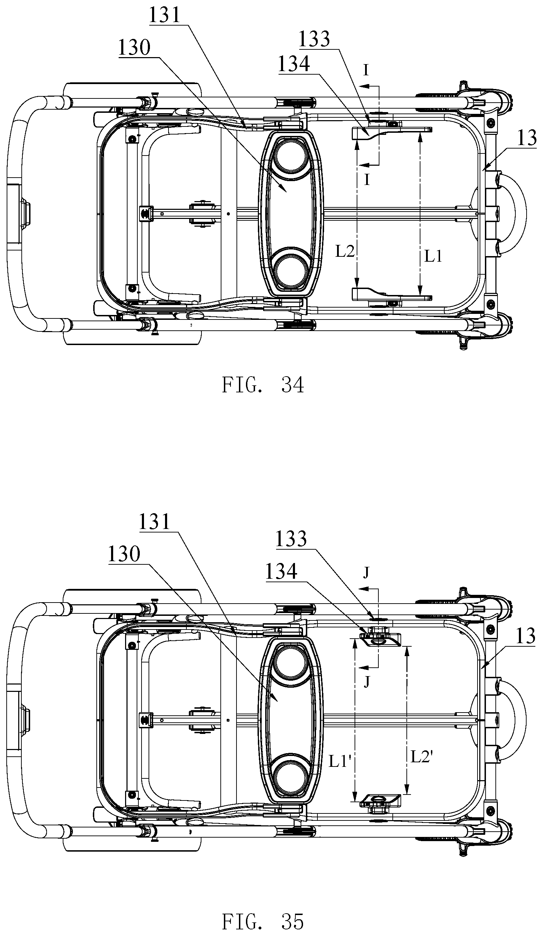

Referring to FIG. 32 to FIG. 35, in an embodiment, when the engaging bases 134 are at the folded position, a distance between the engagement portions 1346 of the two engaging bases 134 is L1, and a distance between the base portions 1349 of the two engaging bases 134 is L2, as shown in FIG. 34. Optionally, L1 may have the following range: 323.46mm≤L1≤395.34mm, and for example, L1 is approximately 359.4mm. L2 may have the following range: 293.4mm≤L2≤358.6mm, and for example, L2 is approximately 326mm. Those skilled in the art will appreciate that a distance between the two side rods of the support frame 13 can be changed according to actual requirements to change L1 and L2. When the engaging bases 134 are at the unfolded position, the distance between the engagement portions 1346 of the two engaging bases 134 is L1', and the distance between the base portions 1349 of the two engaging bases 134 is L2', as shown in FIG. 35. Optionally, L1' may have the following range: 301.86mm≤L1'≤368.94mm, and for example, L1' is approximately 335.4mm. For example, L2' is approximately 302mm. Those skilled in the art will appreciate that, in practical use, L1' may be selected appropriately according to a distance between the two engagement grooves of the seat 135 to be fixed. After pivoting from the unfolded position to the folded position, the distance between the two engaging bases 134 is increased by ΔL (i.e., L1-L1') or ΔL (i.e., L2-L2'), and for example, ΔL is approximately 24mm, referring to FIG. 32 and FIG. 33 for comparison. The two engaging bases 134 at the folded position have a larger distance therebetween, and therefore, the seat fixing mechanism 132 occupies a smaller space between the two side rods of the support frame 13, which is beneficial to reducing interference of the engaging bases 134 with other components of the stroller when the stroller is folded. On the other hand, the seat 135 is not required when the stroller is used, and the increase of the distance between the two engaging bases 134 at the folded position is beneficial to reducing interference of the engaging bases 134 with the working of the user, for example, reducing hindering and interference of the engaging bases 134 with movement of a child sitting in a compartment formed by the support frame 13 and the cloth cover, or reducing hindering and interference of the engaging bases 134 with placement and taking of items by the user.

FIG. 36 and FIG. 37 show the stroller with the seat 135 fixed thereto. Optionally, the seat 135 may be a carrier for younger infants, or a seat capable of being assembled to an infant stroller. Optionally, the seat 135 may be replaced with other accessories such as a storage basket. When the seat 135 is mounted, the accessories already mounted on the stroller and possibly interfering with the seat 135 such as the dinner plate assembly 130 should be disassembled first.

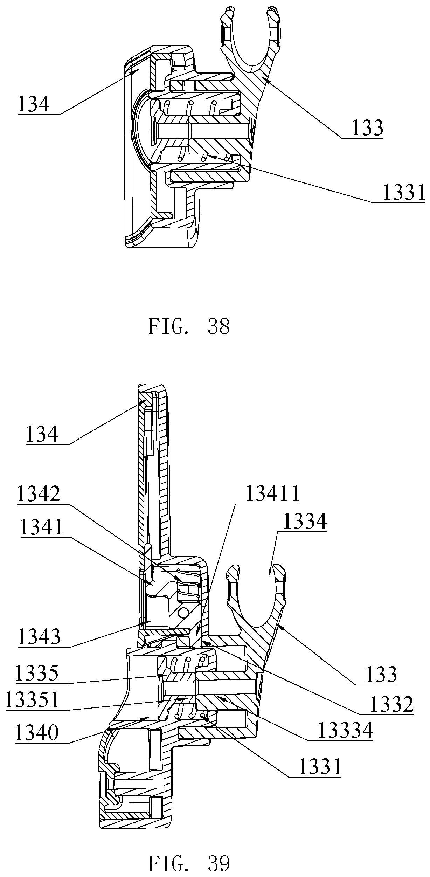

Referring to FIG. 38 to FIG. 41, in an embodiment, an upper end of the engagement portion 1346 is provided with a first engaging hole 1347, and/or a lower end of the base portion 1349 is provided with a second engaging hole 1348. The first engaging hole 1347 is configured to be combined with a rod member in the engagement groove of the seat 135 to stably fix the seat 135 mounted on the stroller to avoid shaking thereof. Certainly, in other embodiments, the first engaging hole 1347 may not be arranged in the upper end of the engagement portion 1346, and no rod member may be arranged in the engagement groove of the seat 135. The second engaging hole 1348 is configured to be engaged with an engaging projection of the seat 135, so as to fix the seat 135 more stably.

With continued reference to FIG. 38 to FIG. 41, in an embodiment, the fixed base 133 is provided with a connecting end portion 1333, the engaging base 134 is provided with a third connecting groove 1342, and the connecting end portion 1333 is inserted into the third connecting groove 1342 to pivotably connect the fixed base 133 to the engaging base 134. Two opposite first convex portions 13331 and two opposite first concave portions 13332 are formed at an end of the connecting end portion 1333 facing the engaging base 134, the two first convex portions 13331 are spaced apart by the two first concave portions 13332, and a first inclined surface 13333 is arranged between the adjacent first convex portion 13331 and first concave portion 13332. A bottom wall of the third connecting groove 1342 is provided with two opposite second convex portions 13421 and two opposite second concave portions 13422, the two second convex portions 13421 are spaced part by the two second concave portions 13422, and a second inclined surface 13423 is arranged between the adjacent second convex portion 13421 and second concave portion 13422. When the engaging base 134 is at the folded position, the two second convex portions 13421 are engaged in the two first concave portions 13331 respectively, and the two first convex portions 13331 are engaged in the two second concave portions 13422 respectively. When the engaging base 134 pivots to the unfolded position from the folded position, the first convex portion 13331 is disengaged from the second concave portion 13422, and through abutting fitting of the second inclined surface 13423 and the first inclined surface 13333, the first convex portion 13331 slides to a position where the first convex portion abuts against the second convex portion 13421, and the engaging base 134 slides in a direction away from the fixed base 133.

Referring to FIG. 39 to FIG. 41, in an embodiment, the fixed base 133 is provided with a mounting groove 1334. The mounting groove 1334 accommodates the side rod of the support frame 13, and the mounting groove 1334 is fixed on the corresponding side rod by a fixing member such as a rivet, a screw, or a bolt and a nut, thereby fixedly connecting the fixed base 133 with the side rod. In an embodiment, the engaging base 134 is provided with a mounting through hole 1340, an end cover 1335 and a first elastic member 1331 are arranged in the mounting through hole 1340, the end cover 1335 is connected to the fixed base 133, an end of the first elastic member 1331 abuts against an end wall of the mounting through hole 1340, the other end of the first elastic member 1331 abuts against the end cover 1335, and the first elastic member 1331 continuously applies a pressure to the engaging base 134, so that the engaging base 134 has a movement tendency of sliding towards the fixed base 133. Optionally, the first elastic member 1331 may be a spring, an elastic sheet, or a torsion spring, as long as the first elastic member can continuously apply a pressure to the engaging base 134.

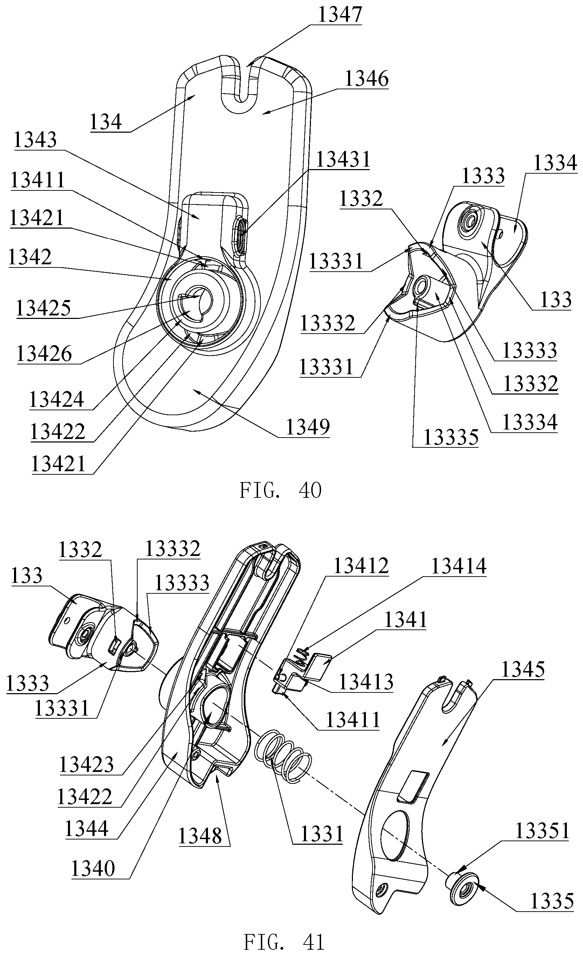

Referring to FIG. 40 to FIG. 41, a first connecting shaft 13334 is arranged in a cavity of the connecting end portion 1333 of the fixed base 133, a projection portion 13424 is further arranged in the third connecting groove 1342 of the engaging base 134, two opposite second convex portions 13421 and two opposite second concave portions 13422 are located around the projection portion 13424, the projection portion 13424 has a fitting hole 13425, the first connecting shaft 13334 is inserted into the fitting hole 13425, and the engaging base 134 can pivot relative to the fixed base 133 around an axial direction of the fitting hole 13425. One of an outer edge of the first connecting shaft 13334 and an inner edge of the fitting hole 13425 is provided with a limiting rib 13335, the other of the outer edge of the first connecting shaft 13334 and the inner edge of the fitting hole 13425 is provided with a limiting groove 13426, and the limiting groove 13426 is engaged with the limiting rib 13335 to limit a rotation range of the engaging base 134 relative to the fixed base 133, thus avoiding excessive rotation of the engaging base 134.

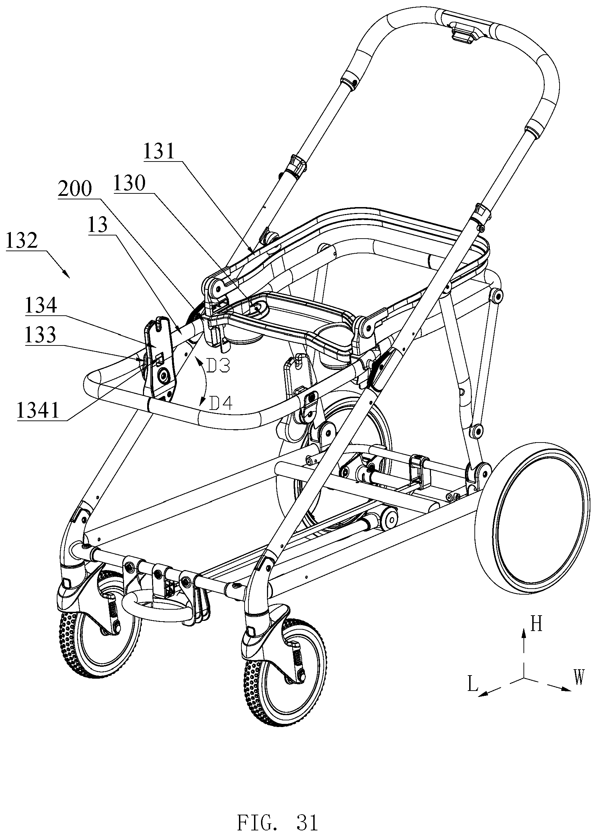

In this embodiment shown in FIG. 40 and FIG. 41, the limiting rib 13335 is arranged on the first connecting shaft 13334, the limiting groove 13426 is arranged in the fitting hole 13425, and an included angle between two circumferential ends of the limiting groove 13426 is substantially 90°, so that the engaging base 134 is allowed to rotate by substantially 90° to rotate between the unfolded position and the folded position by the engagement of the limiting groove 13426 and the limiting rib 13335. Specifically, when the engaging base 134 is at the folded position (for example, as shown in FIG. 30), the limiting rib 13335 abuts against an end portion of the limiting groove 13426, so that the engaging base 134 is limited from rotating in a counterclockwise direction (see direction D3 in FIG. 30), and the engaging base 134 can only rotate in a clockwise direction (see direction D4 in FIG. 30). The engaging base 134 is rotated by substantially 90° clockwise, the engaging base 134 reaches the unfolded position shown in FIG. 41, and in this case, the limiting rib 13335 abuts against the other end portion of the limiting groove 13426, so that the engaging base 134 is limited from continuously rotating in the clockwise direction (see direction D4 in FIG. 31), and the engaging base 134 can only rotate back to the folded position in the counterclockwise direction (see direction D3 in FIG. 31). It can be understood by those skilled in the art that the rotation range of approximately 90° in this embodiment is only exemplary, those skilled in the art can set other suitable rotation ranges as needed, and for example, the included angle between the two circumferential end portions of the limiting groove 13426 can be set to approximately 180°, so that when the engaging base 134 reaches the unfolded position shown in FIG. 41, the engaging base 134 rotates by approximately 90° in the clockwise direction (see direction D4 in FIG. 31) again to be disengaged from the unfolded position to reach another folded position.

With continued reference to FIG. 39 to FIG. 41, in an embodiment, the end cover 1335 has a second connecting shaft 13351 extending towards the fixed base 133, and the end cover 1335 can be connected to the fixed base 133 by a fastener (not shown) such as a rivet passing through the first connecting shaft 13334 and the second connecting shaft 13351.

Referring to FIG. 40 and FIG. 41, the connecting end portion 1333 is provided with a lock hole 1332, the engaging base 134 includes a mounting cavity 1343 and a release operating member 1341, and the release operating member 1341 is slidably arranged in the mounting cavity 1343. The release operating member 1341 includes: a locking portion 13411 and a pressing portion 13413. When the engaging base 134 pivots to the unfolded position, the locking portion 13411 enters the lock hole 1332 to lock the engaging base 134 at the unfolded position. The pressing portion 13413 is connected to the locking portion 13411, and the release operating member 1341 slides away from the lock hole 1332 by applying a pressure to the pressing portion 13413, so that the locking portion 13411 is separated from the lock hole 1332 to unlock the engaging base 134. Optionally, the mounting cavity 1343 is provided with a chute 13431, and the release operating member 1341 is slidably connected to the chute 13431 through a pin 13412, so that the release operating member 1341 can slide along a length direction of the chute 13431 to cause the locking portion 13411 to enter or exit from the lock hole 1332. Optionally, the engaging base 134 includes a second elastic member 13414, an end of the second elastic member 13414 being fixed in the mounting cavity 1343, the other end of the second elastic member 13414 abutting against the release operating member 1341, and the second elastic member 13414 continuously applying a pressure to the release operating member 1341, so that the release operating member 1341 has a movement tendency of sliding towards the third connecting groove 1342. Optionally, the second elastic member may be a spring, an elastic sheet, or a torsion spring, as long as the second elastic member can continuously apply a pressure to the release operating member 1341. Optionally, the engaging base 134 includes a housing 1344 and a cover plate 1345. The cover plate 1345 is detachably connected to the housing 134 to form a mounting space in the engaging base 134, and the mounting cavity 1343 is arranged in the mounting space.

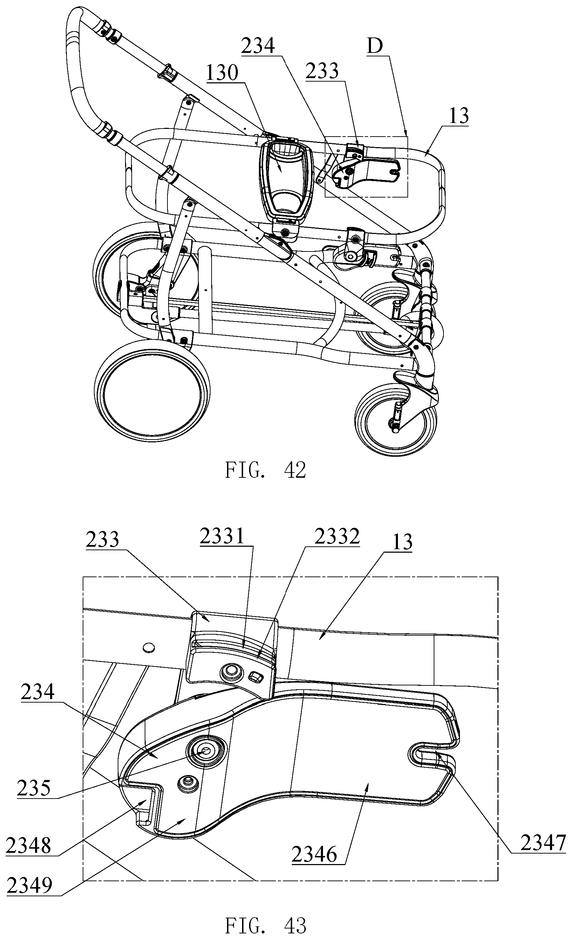

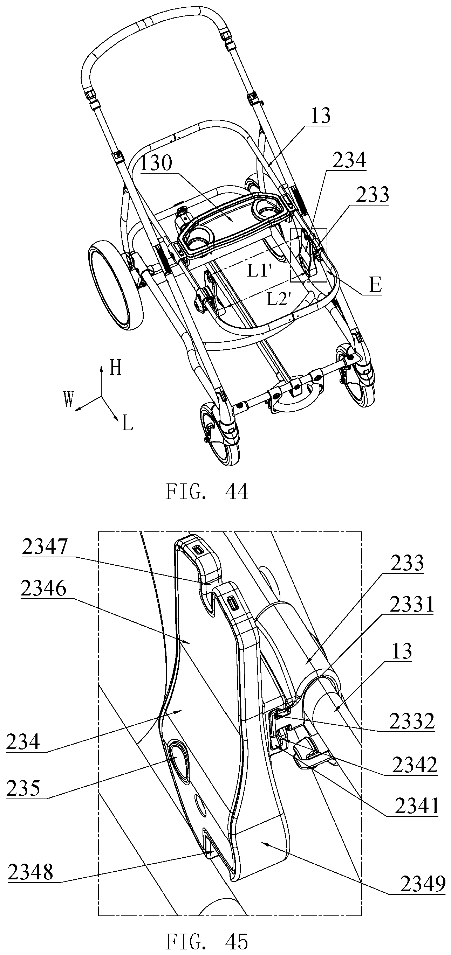

Referring to FIG. 42 to FIG. 45, in an embodiment, a seat fixing mechanism 132 includes: a fixed base 233 and an engaging base 234. The engaging base 234 is pivotably connected to the fixed base 233, and the engaging base 234 can pivot between a folded position and an unfolded position. Specifically, the stroller includes a support frame 13, and one seat fixing mechanism 132 is connected to each of two side rods (i.e., rods extending substantially along the length direction L) of the support frame 13, as shown in FIG. 42. For convenience of description, in the following description, only one of the seat fixing mechanisms 132 will be described, and it should be understood by those skilled in the art that the seat fixing mechanisms 132 arranged on the two side rods have the same structure and pivot between the folded position and the unfolded position simultaneously. It should be noted that in practical use, the engaging bases 234 of the seat fixing mechanisms 132 arranged on the two side rods pivot between the folded position and the unfolded position simultaneously, which is intended to facilitate the folding operation of the stroller and connect a seat 135 (referring to FIG. 43 and FIG. 45), as is required in practical use scenarios, but this does not mean that the two engaging bases 234 cannot pivot independently.

With continued reference to FIG. 42 to FIG. 45, in an embodiment, the engaging base 234 includes: an engagement portion 2346 and a base portion 2349. The engagement portion 2346 is configured to be inserted into an engagement groove (not shown) of the seat 135, and the base portion 2349 is connected to the engagement portion 2346 and pivotably connected to the fixed base 233. Optionally, the engagement portion 2346 is integrally formed with the base portion 2349. Optionally, referring to FIG. 43, the engagement portion 2346 and the base portion 2349 have an arc-shaped transition region therebetween, and a width of the engagement portion 2346 is less than a width of the base portion 2349 to fit a shape of a side wall of the seat 135.

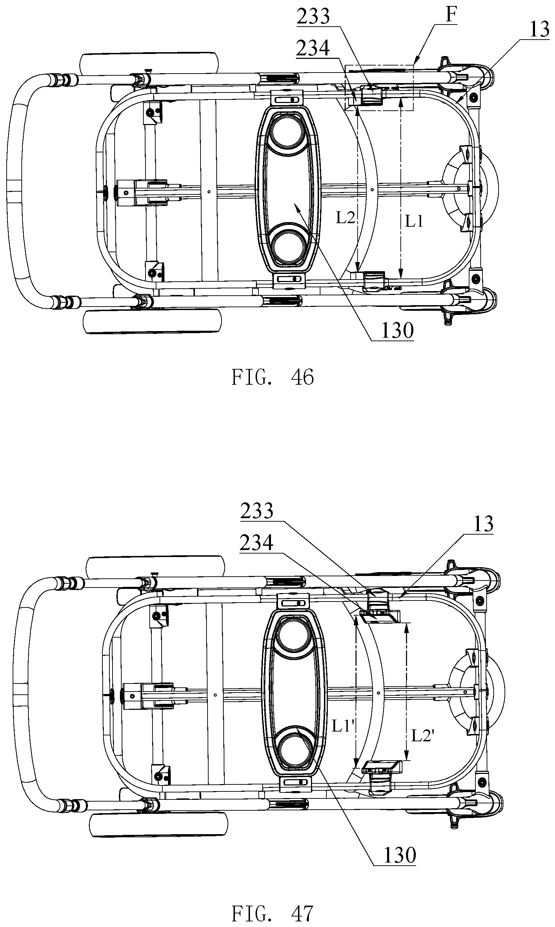

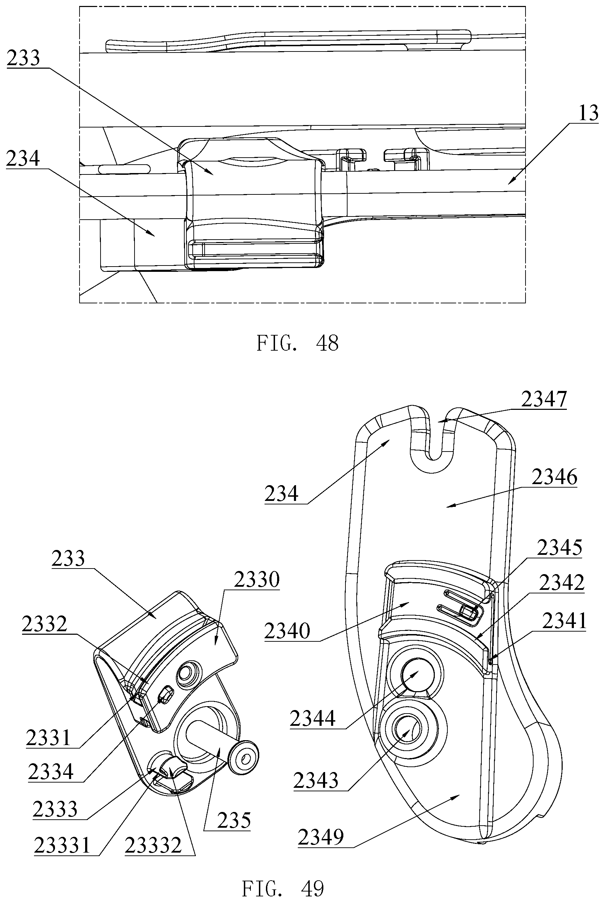

Referring to FIG. 46 to FIG. 47, in an embodiment, when the engaging bases 234 are at the folded position, a distance between the engagement portions 2346 of the two engaging bases 234 is L1, and a distance between the base portions 2349 of the two engaging bases 234 is L2, as shown in FIG. 46. Optionally, L1 may roughly have the following range: 359.46mm≤L1≤439.34mm, and for example, L1 is approximately 399.4mm. L2 may roughly have the following range: 329.4mm≤L2≤402.6mm, and for example, L2 is approximately 366mm. It should be noted that, in this embodiment, since the engaging portions 2346 of the two engaging bases 234 are located below the two side rods of the support frame 13 and at least partially occluded by the two side rods respectively when the engaging bases 234 are at the folded position, a distance between the two engaging portions 2346 identified in FIG. 46 is close to a distance between the two side rods of the support frame 13. Those skilled in the art can appreciate that the distance between the two side rods of the support frame 13 can be changed according to actual requirements to change L1. When the engaging bases 234 are at the unfolded position, the distance between the engagement portions 2346 of the two engaging bases 234 is L1', and the distance between the base portions 2349 of the two engaging bases 234 is L2', as shown in FIG. 47. Optionally, 301.86mm≤L1'≤368.94mm, and for example, L1' is approximately 335.4mm. For example, L2' is approximately 302mm. Those skilled in the art will appreciate that, in practical use, L1' may be selected appropriately according to a distance between the two engagement grooves of the seat 135 to be fixed. After pivoting from the unfolded position to the folded position, the distance between the two engaging bases 234 is increased by ΔL (i.e., L1-L1') or ΔL (i.e., L2-L2'), and for example, ΔL is approximately 44mm, referring to FIG. 46 and FIG. 47 for comparison. The engaging base 234 at the folded position is lower than an upper surface of the fixed base 233 in the height direction H, that is, below the corresponding side rod of the support frame 13, as shown in FIG. 48. Compared with the embodiment shown in FIG. 30 to FIG. 41, the two engaging bases 234 in this embodiment have a larger distance L1 therebetween when at the folded position, and therefore, a smaller space between the two side rods of the support frame 13 is occupied, which is beneficial to reducing interference of the engaging bases 234 with other components of the stroller when the stroller is folded. On the other hand, the seat is not required when the stroller is used, and the increase of the distance between the two engaging bases 234 at the folded position is beneficial to reducing interference of the engaging bases 234 with the working of the user, for example, reducing hindering and interference of the engaging bases 234 with movement of a child sitting in a compartment formed by the support frame 13 and the cloth cover, or reducing hindering and interference of the engaging bases 234 with placement and taking of the item support frame by the user. The seat 135 according to this embodiment is the same as the seat 135 according to the embodiment shown in FIG. 30 to FIG. 41.

Referring to FIG. 45, in an embodiment, an upper end of the engagement portion 2346 is provided with a first engaging hole 2347, and/or a lower end of the base portion 2349 is provided with a second engaging hole 2348. The first engaging hole 2347 is configured to be combined with a rod member in the engagement groove of the seat 135 to stably fix the seat 135 mounted on the stroller to avoid shaking thereof. The second engaging hole 2348 is configured to be engaged with an engaging projection of the seat 135, so as to fix the seat 135 more stably.

Referring to FIG. 49, in an embodiment, the fixed base 233 is provided with a pivot shaft 235, the engaging base 234 is provided with a mounting hole 2343, the mounting hole 2343 sleeves the pivot shaft 235, and the engaging base 234 can pivot around the pivot shaft 235 and slide along an axial direction of the pivot shaft 235. Optionally, positions of the pivot shaft 235 and the mounting hole 2343 may be interchanged. That is, the fixed base 233 is provided with the mounting hole 2343, and the engaging base 234 is provided with the pivot shaft 235. When the engaging base 234 pivots to the folded position, the engaging base 234 does not protrude from the upper surface of the fixed base 233 in the height direction H. Optionally, as shown in FIG. 48, When the engaging base 234 pivots to the folded position, the engaging base 234 is lower than the upper surface of the fixed base 233 in the height direction H. Optionally, the fixed base 233 is further provided with a limiting portion 2333, and the engaging base 234 is further provided with a limiting hole 2344. When the engaging base 234 pivots to the folded position, the limiting portion 2333 is engaged in the limiting hole 2344. Optionally, positions of the limiting portion 2333 and the limiting hole 2344 may be interchanged. That is, the fixed base 233 is further provided with the limiting hole 2344, and the engaging base 234 is provided with the limiting portion 2333. Optionally, the limiting portion 2333 includes a plurality of finger-shaped elastic members 23331, the plurality of elastic members 23331 are arranged at intervals, and an end portion of each elastic member 23331 away from the fixed base 233 is convex and provided with a guide inclined surface 23332. When the elastic members 23331 are inserted into the limiting hole 2344, an inner wall of the limiting hole 2344 presses the guide inclined surfaces 23332, causing the elastic members 23331 to be deformed towards spaces between the elastic members 23331. After the elastic member 23331 is inserted into the limiting hole 2344, the elastic member 23331 is pressed against the inner wall of the limiting hole 2344 due to an elastic restoring force of the elastic member 23331, and the convex end portion passes through the limiting hole 2344 and is stopped at a peripheral wall of the limiting hole 2344, thereby preventing the elastic member 23331 from being disengaged from the limiting hole 2344. In actual use, the user applies a certain pulling force to the engaging base 234 to overcome a movement restriction between the convex end portion and the limiting hole, so that the engaging base 234 slides in a direction away from the fixed base 233. Optionally, the fixed base 233 is provided with an arc-shaped connecting body 2330, the engaging base 234 is provided with a groove body 2340, and a shape of the groove body 2340 matches a shape of the connecting body 2330. Specifically, the connecting body 2330 is configured to protrude from a side of the fixed base 233 facing the engaging base 234, the groove body 2340 is configured to protrude from a side of the engaging base 234 facing the fixed base 233, and when the engaging base 234 is at the folded position, the connecting body 2330 and the groove body 2340 are dislocated from each other. When the engaging base 234 is required to be pivoted to the unfolded position, the user applies a pulling force to the engaging base 234, so that the elastic member 23331 is disengaged from the limiting hole 2344, the engaging base 234 slides in a direction away from the fixed base 233, and an end of the connecting body 2330 and an end of the groove body 2340 are aligned with each other. Then, the user rotates the engaging base 234 to make the connecting body 2330 gradually enter the groove body 2340. When the engaging base 234 is rotated to the unfolded position, the connecting body 2330 is fully engaged in the groove body 2340. Optionally, positions of the connecting body 2330 and the groove body 2340 may be interchanged. That is, the fixed base 233 is further provided with the groove body 2340, and the engaging base 234 is provided with the connecting body 2330. Optionally, the connecting body 2330 is provided with a first connecting groove 2331 and a first connecting edge 2332, and the groove body 2340 is provided with a second connecting groove 2341 and a second connecting edge 2342. When the engaging base 234 pivots to the unfolded position, the second connecting groove 2341 accommodates the first connecting edge 2332, and the second connecting edge 2342 enters the first connecting groove 2331. Optionally, the first connecting groove 2331 may be a dovetail groove or a rectangular parallelepiped shaped groove. Optionally, one of the connecting body 2330 and the groove body 2340 is provided with a limiting recess 2334, and the other of the connecting body 2330 and the groove body 2340 is provided with a limiting member 2345. When the engaging base 234 pivots to the unfolded position, the limiting member 2345 is engaged in the limiting recess 2334 to lock the engaging base 234 at the unfolded position. In this embodiment, a third elastic member (not shown) may be further arranged between the fixed base 233 and the engaging base 234, and the third elastic member abuts against the engaging base 234 and continuously applies a pressure to the engaging base 234, so that the engaging base 234 has a movement tendency of sliding towards the fixed base 233. In other embodiments, the third elastic member may not be provided, and the engaging base 234 is moved towards the fixed base 233 along the pivot shaft 235 by a pushing operation of the user.

Working principles of the embodiment shown in FIG. 30 to FIG. 41 and the embodiment shown in FIG. 42 to FIG. 49 will be described below respectively.

For the stroller according to the embodiment shown in FIG. 30 to FIG. 41, when the seat 135 is not mounted, the engaging base 134 of the seat fixing mechanism 132 is at the folded position as shown in FIG. 30, and the seat fixing mechanisms 132 on both sides of the stroller have a large distance L1 (or L2). When the seat 135 is required to be mounted, if necessary, the accessories interfering with the seat 135 such as the dinner plate assembly 130 are required to be disassembled. The dinner plate assembly 130 is not required be disassembled if the dinner plate assembly 130 does not interfere with assembly of the seat 135. The user pivots the engaging base 134 from the folded position to the unfolded position, and in the pivoting process, the engaging base 134 slides in a direction away from the fixed base 133 due to the engagement between the connecting end portion 1333 and the third connecting groove 1342, that is, the engaging bases 134 on both sides of the stroller slide towards each other. Thus, the distance of the seat fixing mechanisms 132 on both sides of the stroller is reduced to L1' (or L2') to adapt to the distance of the two engagement grooves of the seat 135. When the engaging base 134 pivots to the unfolded position, the locking portion 13411 enters the lock hole 1332 under the action of the second elastic member 13414, so as to lock the engaging base 134 at the unfolded position. In this case, the engagement portion 1346 is inserted into the engagement groove of the seat 135, and the rear of a backrest of the seat 135 can be further clamped to the support frame 13 (as shown in FIG. 37, the seat 135 is also clamped to a front rod of the support frame 13), thereby fixedly mounting the seat 135. When the seat 135 is not required to be used, the engagement portion 1346 is pulled out from the engagement groove of the seat 135, the seat 135 is separated from the front rod of the support frame 13, and the seat 135 is removed. The user presses the pressing portion 13413 of the release operating member 1341 to make the locking portion 13411 exit from the lock hole 1332, and then pivots the engaging base 134 towards the folded position, so that the engaging base 134 slides towards the fixed base 133 under the action of the first elastic member 1331. When the engaging base 134 pivots to the folded position, the distance of the seat fixing mechanisms 132 on both sides of the stroller is again increased to L1 (or L2).

For the stroller according to the embodiment shown in FIG. 42 to FIG. 49, when the seat 135 is not mounted, the engaging base 234 of the seat fixing mechanism 132 is at the folded position as shown in FIG. 46, the engaging base 234 is lower than the upper surface of the fixed base 233 in the height direction H in this case, and the seat fixing mechanisms 132 on both sides of the stroller have a large distance L1 (or L2). When the seat 135 is required to be mounted, if necessary, the accessories interfering with the seat 135 such as the dinner plate assembly 130 are required to be disassembled. Then, the user pivots the engaging base 234 from the folded position to the unfolded position. Specifically, the user first pulls the engaging base 234 in a direction away from the fixed base 233, so that the limiting portion 2333 is separated from the limiting hole 2344. Thus, the distance of the seat fixing mechanisms 132 on both sides of the stroller is reduced to L1' (or L2') to adapt to the distance of the two engagement grooves of the seat 135. The user then pivots the engaging base 234 towards the unfolded position. During the pivoting, the second connecting groove 2341 accommodates the first connecting edge 2332, and the second connecting edge 2342 enters the first connecting groove 2331, so that the arc-shaped connecting body 2330 gradually enters and is engaged in the groove body 2340. When the engaging base 234 pivots to the unfolded position, the limiting member 2345 is engaged in the limiting recess 2334 to lock the engaging base 234 at the unfolded position. In this case, the engagement portion 1346 is inserted into the engagement groove of the seat 135, and the rear of the backrest of the seat 135 can be further clamped to the support frame 13, thereby fixedly mounting the seat 135. When the seat 135 is not required to be used, the engagement portion 1346 is pulled out from the engagement groove of the seat 135, and the seat 135 is removed. The user pivots the engaging base 134 towards the folded position, and under the action of the third elastic member or the pushing operation of the user, the engaging base 134 slides towards the fixed base 133. When the engaging base 134 pivots to the folded position, the distance of the seat fixing mechanisms 132 on both sides of the stroller is again increased to L1 (or L2).

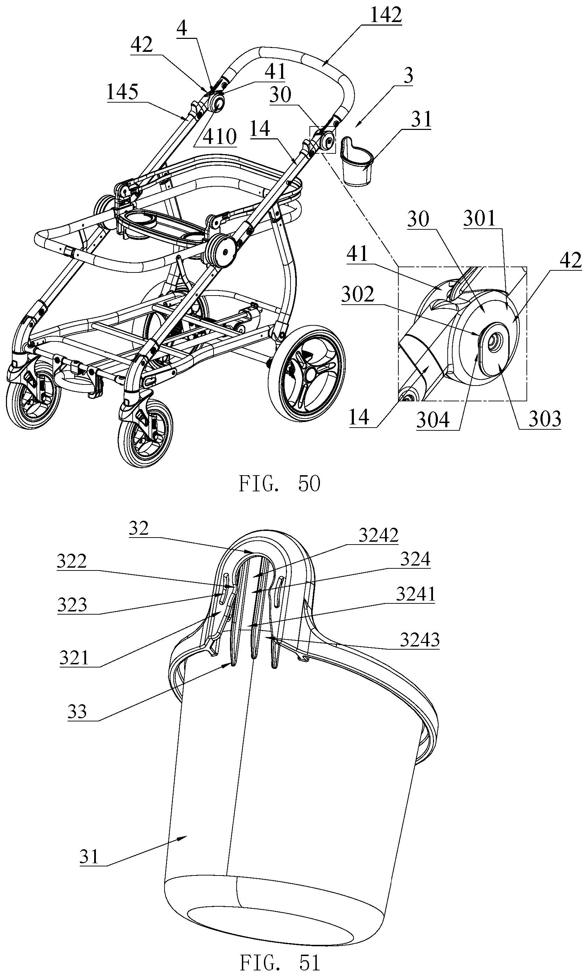

Referring to FIG. 50 and FIG. 51, an embodiment of the present application provides a storage assembly 3. The storage assembly 3 is arranged, for example, on the handlebar 14. Specifically, this storage assembly 3 includes: a mounting frame 30 and a container 31. In this embodiment, the handlebar 14 includes a push handle 142 and an extending rod 145, the push handle 142 being roughly U-shaped, the extending rod 145 being straight and connected to an end portion of the push handle 142 through a pivot assembly 4, and the push handle 142 and the extending rod 145 can be pivoted relative to each other through the pivot assembly 4, thereby reducing a volume of the folded stroller. The pivot assembly 4 includes a first connector 41 and a second connector 42 pivotally connected to each other, the first connector 41 is connected to the push handle 142, and the second connector 42 is connected to the extending rod 145. Optionally, an unlocking button 410 is arranged on the first connector 41. For example, the unlocking button 410 is arranged on an inner side of the first connector 41 and configured to unlock the push handle 142 and the extending rod 145, thus allowing the push handle 142 to pivot relative to the extending rod 145. Locking and release mechanisms between the push handle 142 and the extending rod 145 can be any locking and release mechanism known in the art, and are not limited in the present application. In this embodiment, the storage assembly 3 is connected to the pivot assembly 4. Specifically, in this embodiment, the second connector 42 of the pivot assembly 4 serves as the mounting frame 30. Optionally, the mounting frame 30 may be fixedly arranged at other positions of the handlebar 14 such as the extending rod 145 and the push handle 142, or at other parts of the frame such as the rear leg rod 12 or the support frame 13 according to actual needs, as long as the storage assembly 3 does not interfere with the folding of the frame. The storage assembly 3 according to this embodiment may be mounted in any of the embodiments shown in FIG. 1 to FIG. 49.

In the embodiment shown in FIG. 50 and FIG. 51, a first projecting portion 302 and a second projecting portion 303 protruding from an outer wall 301 are sequentially arranged on the outer wall 301 of the mounting frame 30. The first projecting portion 302 and the second projecting portion 303 form a roughly umbrella-shaped structure in which the first projecting portion 302 is retracted radially inwards relative to the second projecting portion 303, thereby forming a first engaging groove 304 between a side of the second projecting portion 303 facing the frame and the outer wall 301 of the mounting frame 30. The container 31 is provided with an engaging mechanism 32 to be detachably connected to the mounting frame 30. Specifically, the engaging mechanism 32 includes: an engaging edge 321, the engaging edge 321 forming a roughly U-shaped second engaging groove 324. For example, one locking projection 322 is arranged on each of two opposite edges of the roughly U-shaped second engaging groove 324, and thus, the two locking projections 322 divide the second engaging groove 324 into a guide portion 3241 and an engaging portion 3242. A distance between the two locking projections 322 is slightly smaller than a radial size of the first projecting portion 302. A shape of the engaging portion 3242 is formed to be similar to a peripheral shape of the first projecting portion 302, and a radial size of the engaging portion 3242 is substantially equal to (or slightly larger than) the radial size of the first projecting portion 302, so that the first projecting portion 302 can be accommodated in the engaging portion 3242. The guide portion 3241 has an opening 3243 (i.e., an opening 3243 of the roughly U-shaped second engaging groove 324), and a radial size of the guide portion 3241 is larger than the radial size of the first projecting portion 302. Preferably, the radial size of the guide portion 3241 is larger than the radial size of the first projecting portion 302 and smaller than a radial size of the second projecting portion 303. When the container 31 is mounted, the opening 3243 of the second engaging groove 324 is aligned with the first projecting portion 302, so that the first projecting portion 302 enters the guide portion 3241. The container 31 is moved further to cause the first projecting portion 302 to contact the two locking projections 322. In this case, since the distance between the two locking projections 322 is slightly smaller than the radial size of the first projecting portion 302, the first projecting portion 302 abuts against the two locking projections 322. An external force continuously applied by the user to drive the container 31 to move causes the first projecting portion 302 to press the two locking projections 322, which causes the two locking projections 322 to deform away from each other, so that the first projecting portion 302 enters the engaging portion 3242 of the second engaging groove 324. When the first projecting portion 302 completely enters the engaging portion 3242, the first projecting portion 302 is accommodated in the engaging portion 3242, the first projecting portion 302 no longer presses the two locking projections 322, and thus, the two locking projections 322 are reset under the action of own elastic restoring forces. In this case, a part of the engaging edge 321 enters the first engaging groove 304, and the first projecting portion 302 is accommodated and locked in the engaging portion 3242. So far, the container 31 is fixed to the mounting frame 30 and the storage assembly 3 is mounted.

In an embodiment, optionally, a part of the engaging edge 321 near the locking projection 322 is provided with a deformation groove 323, and when the first projecting portion 302 presses the locking projection 322, the deformation groove 323 assists in deformation of the locking projection 322 away from the other locking projection 322. Optionally, the container 31 may be any type of container such as a cup holder or a storage basket. Optionally, an outer wall of the container 31 near the second engaging groove 324 is provided with a support rib 33, and when the first projecting portion 302 is locked in the engaging portion 3242, the support rib 33 abuts against the outer wall of the second projecting portion 303 to make locking firmer.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. A pull rod mechanism (2), comprising: a third connecting base (194); a rotating portion (192) being connected to the third connecting base (194) and pivotable relative to the third connecting base (194) between a first pivot position and a second pivot position; a pull rod (19), an end of the pull rod (19) being connected to the rotating portion (192), when the rotating portion (192) pivots to the first pivot position, the pull rod (19) pivoting to an erect position, and when the rotating portion (192) pivots to the second pivot position, the pull rod (19) pivoting to a lying position; and a first positioning member (193) being arranged between the third connecting base (194) and the rotating portion (192), and the first positioning member (193) being configured to restrict the rotating portion (192) from pivoting.

2. The pull rod mechanism (2) according to claim 1, wherein the first positioning member (193) is a damping plate (1931), and the damping plate (1931) is clamped between the rotating portion (192) and the third connecting base (194).

3. The pull rod mechanism (2) according to claim 2, wherein an end of the third connecting base (194) is recessed inwards to form a pivot space (1944), at least part of the rotating portion (192) is received in the pivot space (1944), and the damping plate (1931) is clamped between the rotating portion (192) and a side wall of the pivot space (1944).

4. The pull rod mechanism (2) according to claim 3, wherein the pivot space (1944) comprises two side walls (19441) arranged opposite to each other, at least part of the rotating portion (192) is located between the two side walls (19441) of the pivot space (1944), and the first positioning member (193) comprises two damping plate (1931)s, one of the two damping plate (1931)s being clamped between one of the two side walls (19441) of the pivot space (1944) and the rotating portion (192), and another of the two damping plate (1931)s being clamped between another of the two side walls (19441) of the pivot space (1944) and the rotating portion (192).

5. The pull rod mechanism (2) according to claim 1, wherein the first positioning member (193) comprises: a positioning recess (1932) arranged in one of the rotating portion (192) and the third connecting base (194); and a positioning protrusion (1945) arranged on another of the rotating portion (192) and the third connecting base (194), when the positioning protrusion (1945) enters the positioning recess (1932), a shape of the positioning recess (1932) fitting a shape of the positioning protrusion (1945) to restrict the rotating portion (192) from pivoting.

6. The pull rod mechanism (2) according to claim 5, wherein an end of the third connecting base (194) is recessed inwards to form a pivot space (1944), at least part of the rotating portion (192) is received in the pivot space (1944), and an inner surface of at least one side wall of the pivot space (1944) faces at least one surface of the rotating portion (192); one of the surface of the rotating portion (192) and the side wall of the pivot space (1944) is provided with at least one elastic finger (199), the other of the surface of the rotating portion (192) and the side wall of the pivot space (1944) is provided with a plurality of positioning recesses (1932), the positioning protrusion (1945) is arranged on a side of the elastic finger (199) facing the positioning recess (1932), and the positioning protrusion (1945) is engaged with one of the plurality of positioning recesses (1932) to position the pull rod (19) at one of a plurality of pivot angles.

7. The pull rod mechanism (2) according to claim 1, wherein an end of the third connecting base (194) is recessed inwards to form a pivot space (1944), at least part of the rotating portion (192) is received in the pivot space (1944), and a limiting groove (19440) is arranged in an inner wall of the pivot space (1944) of the third connecting base (194); the rotating portion (192) is provided with a limiting protrusion (1923), which slides in the limiting groove (19440) with pivoting of the rotating portion (192), and when the rotating portion (192) pivots from the first pivot position to the second pivot position, the limiting protrusion (1923) abuts against a side wall of the limiting groove (19440) to restrict the rotating portion (192) from continuing to pivot.

8. The pull rod mechanism (2) according to claim 1, further comprising: a sliding rail (196), the third connecting base (194) being connected to the sliding rail (196) and slidable between a first sliding position and a second sliding position along the sliding rail (196), when the third connecting base (194) slides to the first sliding position, the pull rod (19) sliding to an extend position, and when the third connecting base (194) slides to the second sliding position, the pull rod (19) sliding to an accommodated position.

9. The pull rod mechanism (2) according to claim 8, further comprising: a locking device arranged on the third connecting base (194) and the sliding rail (196), the locking device being configured to lock the third connecting base (194) at the first sliding position and/or the second sliding position.

10. The pull rod mechanism (2) according to claim 9, wherein the third connecting base (194) is provided with a first through hole (1941) slidably sleeving the sliding rail (196), and the locking device comprises: a second through hole (1942) arranged in a side wall of the first through hole (1941); a second positioning hole (1961) arranged in a part of the sliding rail (196) corresponding to the first sliding position of the third connecting base (194); and a second positioning member (1960) arranged in the sliding rail (196), at least part of the second positioning member (1960) being slidable in the second positioning hole (1961) to retract into and protrude from the second positioning hole (1961), and when the third connecting base (194) slides to the first sliding position, at least part of the second positioning member (1960) protruding from the second positioning hole (1961) and entering the second through hole (1942), so as to lock the third connecting base (194) at the first sliding position.

11. The pull rod mechanism (2) according to claim 9, wherein the third connecting base (194) is provided with a first through hole (1941) slidably sleeving the sliding rail (196), and the locking device comprises: a second through hole (1942) arranged in a side wall of the first through hole (1941); a third positioning hole (1963) arranged in a part of the sliding rail (196) corresponding to the second sliding position of the third connecting base (194); and a third positioning member (1962) arranged in the sliding rail (196), at least part of the third positioning member (1962) being slidable in the third positioning hole (1963) to retract into and protrude from the third positioning hole (1963), and when the third connecting base (194) slides to the second sliding position, at least part of the third positioning member (1962) protruding from the third positioning hole (1963) and entering the second through hole (1942), so as to lock the third connecting base (194) at the second sliding position.

12. The pull rod mechanism (2) according to claim 9, further comprising: a fixing portion (198), the sliding rail (196) being connected to the fixing portion (198), and when the rotating portion (192) pivots from the second pivot position to the first pivot position, the pull rod (19) abutting against a front surface of the fixing portion (198) to restrict the rotating portion (192) from continuing to pivot.

13. A stroller, comprising: a chassis (10); and the pull rod mechanism (2) according to any one of claims 1 to 12, the pull rod mechanism (2) being connected to the chassis (10).

14. A frame (1), comprising:
a chassis (10);
a front leg rod (11), a lower end of the front leg rod (11) being pivotably connected to the chassis (10);
a rear leg rod (12), a lower end of the rear leg rod (12) being pivotably connected to the chassis (10); and
a handlebar (14), a lower end of the handlebar (14) being pivotably connected to an upper end of the front leg rod (11), and an upper end of the rear leg rod (12) being pivotably connected to the handlebar (14),
when the frame (1) is switched from an unfolded state to a folded state, the handlebar (14) pivots relative to the front leg rod (11) and drives the front leg rod (11) and the rear leg rod (12) to pivot relative to the chassis (10), so that the handlebar (14), the front leg rod (11) and the rear leg rod (12) are folded towards the chassis (10).

15. The frame (1) according to claim 14,
wherein when the frame (1) is switched from the unfolded state to the folded state, the handlebar (14) and the rear leg rod (12) pivot towards the front of the frame (1), and the front leg rod (11) pivots towards the rear of the frame (1).

16. The frame (1) according to claim 14,
wherein when the frame (1) is switched from the unfolded state to the folded state, an included angle between the handlebar (14) and the rear leg rod (12) is gradually reduced.

17. The frame (1) according to claim 14, further comprising:
a locking joint (15) being connected to the lower end of the handlebar (14) and the upper end of the front leg rod (11), and the locking joint (15) being configured to lock the handlebar (14) and the front leg rod (11) to prevent relative a pivoting of the handlebar (14) and the front leg rod (11); and
a support frame (13) being pivotably connected to the locking joint (15).

18. The frame (1) according to claim 17, further comprising:
a linkage rod (18), an end of the linkage rod (18) being pivotably connected to the support frame (13), and another end of the linkage rod (18) being pivotably connected to the rear leg rod (12),
wherein a pivot point where the rear leg rod (12) is pivotably connected to the handlebar (14) is located on a side of the handlebar (14) facing an interior of the frame (1), and a projection of a pivot track of the rear leg rod (12) along a height direction (H) does not overlap with a projection of a pivot track of the front leg rod (11) and/or the handlebar (14) along the height direction (H).

19. The frame (1) according to claim 18,
wherein when the frame (1) is switched from the unfolded state to the folded state, the linkage rod (18) pivots towards the rear of the frame (1), the rear leg rod (12) pivots towards the front of the frame (1), and an included angle between the linkage rod (18) and the rear leg rod (12) is gradually increased.

20. The frame (1) according to claim 14, further comprising:
a support frame (13), the support frame (13) being pivotably connected to the handlebar (14).

21. The frame (1) according to claim 20, further comprising:
a linkage rod (18), an end of the linkage rod (18) being pivotably connected to the support frame (13), and another end of the linkage rod (18) being pivotably connected to the front leg rod (11),
wherein a pivot point where the rear leg rod (12) is pivotably connected to and the handlebar (14) is located on a lower side of the handlebar (14) in a height direction (H), and a projection of a pivot track of the rear leg rod (12) along the height direction (H) at least partially overlaps with a projection of a pivot track of the front leg rod (11) and/or the handlebar (14) along the height direction (H).

22. A seat fixing mechanism (132), comprising:
a fixed base (133, 233); and
an engaging base (134, 234) slidably connected to the fixed base (133, 233),
wherein the engaging base (134, 234) is capable of moving between a folded position and an unfolded position relative to the fixed base (133, 233), and a distance of the engaging base (134, 234) from the fixed base (133, 233) at the unfolded position is great than the distance of the engaging base (134, 234) from the fixed base (133, 233) at the folded position.

23. The seat fixing mechanism (132) according to claim 22,
wherein the fixed base (133) is provided with a connecting end portion (1333), the engaging base (134) is provided with a third connecting groove (1342), and the connecting end portion (1333) is inserted into the third connecting groove (1342) to pivotably connect the fixed base (133) to the engaging base (134).

24. The seat fixing mechanism (132) according to claim 23,
wherein at least one first convex portion (13331) and at least one first concave portion (13332) are formed at an end of the connecting end portion (1333) facing the engaging base (134), a first inclined surface (13333) is arranged between the first convex portion (13331) and the first concave portion (13332),
at least one second convex portion (13421) and at least one second concave portion (13422) are formed at a bottom wall of the third connecting groove (1342), a second inclined surface (13423) is arranged between the second convex portion (13421) and the second concave portion (13422),
when the engaging base (134) is at the folded position, the second convex portion (13421) is engaged in the first concave portion (13332), and the first convex portion (13331) is engaged in the second concave portion (13422), and
when the engaging base (134) pivots from the folded position to the unfolded position, the first convex portion (13331) is disengaged from the second concave portion (13422), and through fitting of the second inclined surface (13423) and the first inclined surface (13333), the first convex portion (13331) slides to a position where the first convex portion (13331) abuts against the second convex portion (13421), and the engaging base (134, 234) slides in a direction away from the fixed base (133).

25. The seat fixing mechanism (132) according to claim 23,
wherein two opposite first convex portions (13331) and two opposite first concave portions (13332) are formed at an end of the connecting end portion (1333) facing the engaging base (134), the two first convex portions (13331) are spaced apart by the two first concave portions (13332), and a first inclined surface (13333) is arranged between the adjacent first convex portion (13331) and first concave portion (13332),
the bottom wall of the third connecting groove (1342) is provided with two opposite second convex portions (13421) and two opposite second concave portions (13422), the two second convex portions (13421) are spaced part by the two second concave portions (13422), and a second inclined surface (13423) is arranged between the adjacent second convex portion (13421) and second concave portion (13422),
when the engaging base (134) is at the folded position, the two second convex portions (13421) are engaged in the two first concave portions (13332) respectively, and the two first convex portions (13331) are engaged in the two second concave portions (13422) respectively,
when the engaging base (134) pivots to the unfolded position from the folded position, the first convex portion (13331) is disengaged from the second concave portion (13422), and through fitting of the second inclined surface (13423) and the first inclined surface (13333), the first convex portion (13331) slides to a position where the first convex portion (13331) abuts against the second convex portion, and the engaging base (134) slides in a direction away from the fixed base (133).

26. The seat fixing mechanism (132) according to claim 22,
wherein the engaging base (134) is provided with a mounting through hole (1340), an end cover (1335) and a first elastic member (1331) are arranged in the mounting through hole (1340), the end cover (1335) is connected to the fixed base (133), an end of the first elastic member (1331) abuts against an end wall of the mounting through hole (1340), another end of the first elastic member (1331) abuts against the end cover (1335), and the first elastic member (1331) continuously applies a pressure to the engaging base (134), so that the engaging base (134) has a movement tendency of sliding towards the fixed base (133).

27. The seat fixing mechanism (132) according to claim 23,
the connecting end portion (1333) is provided with a lock hole (1332),
the engaging base (134) includes a release operating member (1341),
when the engaging base (134) pivots to the unfolded position, at least part of the release operating member (1341) enters the lock hole (1332) to lock the engaging base (134) at the unfolded position.

28. The seat fixing mechanism (132) according to claim 22,
wherein one of the fixed base (233) and the engaging base (234) is provided with a pivot shaft (235), and another of the fixed base (233) and the engaging base (234) is provided with a mounting hole (2343),
the mounting hole (2343) sleeves the pivot shaft (235), and the engaging base (234) is pivotable around the pivot shaft (235) and slides along an axial direction of the pivot shaft (235), and
when the engaging base (234) pivots to the folded position, the engaging base (234) does not protrude from an upper surface of the fixing base in a height direction (H).

29. The seat fixing mechanism (132) according to claim 22,
wherein one of the fixed base (233) and the engaging base (234) is further provided with a limiting portion (2333), and another of the fixed base (233) and the engaging base (234) is further provided with a limiting hole (2344), and
when the engaging base (234) pivots into a folded state, the limiting portion (2333) is engaged in the limiting hole (2344).

30. The seat fixing mechanism (132) according to claim 22,
wherein one of the fixed base (233) and the engaging base (234) is further provided with an arc-shaped connecting body (2330), another of the fixed base (233) and the engaging base (234) is further provided with a groove body (2340), and a shape of the groove body (2340) fits that of the connecting body, and
when the engaging base (234) pivots into an unfolded state, the connecting body (2330) is engaged in the groove body (2340).
